# EUROPEAN PATENT SPECIFICATION

(11) **EP 3 870 755 B1**
(45) Date of publication and mention of the grant of the patent: **24.04.2024**
(21) Application number: 18937981.1
(22) Date of filing: 24.10.2018
(51) Int. Cl.: D21H 27/00, D21H 11/14, D21C 5/02, D21C 9/00, D21C 9/10

(54) **RELEASE LINER**
TRENNSCHICHT
DOUBLURE ANTI-ADHÉRENTE

(43) Date of publication of application: 01.09.2021
(73) Proprietor: UPM-Kymmene Corporation, 00100 Helsinki (FI)
(72) Inventor: ANTILA, Janne, 13100 Hämeenlinna (FI)
(74) Representative: Berggren Oy
(86) International application number: PCT/FI2018/050777
(87) International publication number: WO 2020/084188

(56) References cited:
- EP-A1- 2 383 089
- WO-A1-2007/063165
- SE-C2- 521 722
- US-A- 5 316 621
- US-A- 5 316 621
- US-A- 5 567 272
- US-A1- 2009 239 020
- US-A1- 2009 239 020

## Description

### Technical field

The invention relates to a backing material layer suitable for use as a layer of a release liner. The invention further relates to a release liner. This invention further relates to a label laminate comprising a release liner. The invention further relates to a method for obtaining backing material layer suitable for use as a layer of a release liner. The invention further relates to a method for manufacturing pulp, which is suitable for use in a layer of a release liner. The invention further relates to use of pulp in a release liner.

### Background

A label laminate typically comprises a face layer and a release liner, which are laminated together. A release liner refers to a product comprising typically a backing material layer and a release coating layer applied on at least one side of the backing material layer.

### Summary

Aspects of the invention are characterized by what is stated in the independent claims. Various embodiments of the invention are disclosed in the dependent claims.

According to a first aspect, there is provided a backing material layer for a release liner, wherein the backing material layer comprises:
- bleached chemical pulp, and
- bleached recycled release liner pulp
wherein
- lightness L* of the backing material layer is at least 90,
- color channel b* of the backing material layer is between 2 and 12,
- color channel a* of the backing material layer is between -7 and +3,
- amount of the bleached recycled release liner pulp is at least 1 wt.-% (weight-%) based on the total weight of said backing material layer, and
- the backing material layer has a grammage equal to or higher than 30 grams per square meter.

According to a second aspect, there is provided a release liner comprising
- the backing material layer, and
- a release coating layer on said backing material layer.

According to a third aspect, there is provided a label laminate comprising
- the release liner, and
- a face layer,
wherein an adhesive layer is provided between the release liner and the face layer.

According to a fourth aspect, there is provided a method for manufacturing a backing material layer suitable for use as a layer of a release liner,
the method comprising:
- forming a pulp mixture comprising cellulose fibers by mixing at least bleached chemical pulp and bleached recycled release liner pulp,
- forming a paper web from the pulp mixture,
- reducing moisture content of the paper web hereby forming paper for the backing material layer, and
- treating the paper in order to form the backing material layer
wherein
- the formed backing material layer has a grammage equal to or higher than 30 grams per square meter,
- lightness L* of said backing material layer is at least 90,
- color channel b* of said backing material layer is between 2 and 12, and
- color channel a* of said backing material layer is between -7 and +3, and
- amount of the bleached recycled release liner pulp is at least 1 wt.-% based on the total weight of said backing material layer.

According to an embodiment, the method for manufacturing a backing material layer suitable for use as a layer of a release liner comprises the following step:
- bleaching recycled release liner pulp in order to form bleached recycled release liner pulp before forming the pulp mixture.

According to an embodiment, the recycled release liner pulp is bleached by using at least one of the following bleaching chemicals:
- hydrogen peroxide H₂O₂,
- sodium dithionite Na₂S₂O₄,
- sodium bisulfite NaHSO₃, and
- sodium borohydride solution.

According to an embodiment, the recovered and pulped release liner is bleached by using sodium dithionite Na₂S₂O₄, and the amount of the sodium dithionite is between 0.15 and 0.50 % calculated from the dry weight of the recovered and pulped release liner. Therefore, it is possible to obtain a novel product comprising bleached recycled release liner pulp with quite low bleaching costs.

According to an embodiment, the backing material layer has silicone content between 0 and 1.0 wt.-%, for example between 0 and 0.5 wt.-%. According to an embodiment, the bleached recycled release liner pulp has silicone content less than 1.0 wt.-%, more preferably less than 0.5 wt.-%.

According to an embodiment, the color channel a* of the backing material layer is between -5 and +1. According to an embodiment, the color channel b* of the backing material layer is between 4 and 10. According to an embodiment, the amount of the bleached recycled pulp is at least 5 wt.-% based on the total weight of the backing material layer. According to an embodiment, the lightness L* of the backing material layer is at least 92.

According to an embodiment, the backing material layer comprises a coating on the paper.

According to an embodiment, the amount of the bleached recycled release liner pulp is between 5 wt.-% and 25 wt.-% calculated from the total weight of the backing material layer.

According to an embodiment, amount of mechanical pulp is less than 5 wt.-%, more preferably less than 2 wt.-%, and most preferably less than 0.5 wt.-%, or exactly 0 wt.-%, calculated from the total weight of the backing material layer.

According to an embodiment, total amount of mineral fillers in the backing material layer is less than 12 wt.-% based on the total weight of the backing material layer.

According to a fifth aspect, there is provided a recycled pulp suitable for use as a raw material for a release liner, the pulp comprising
- de-siliconized bleached recycled release liner pulp having silicone content less than 2.0 wt.-% calculated from total dry weight of said pulp, and
- bleached chemical pulp.

The backing material can be used in combination with a release coating in order to form release liner.

According to a sixth aspect, there is provided a method for manufacturing recycled release liner pulp suitable for use as a raw material in a layer of a release liner, the method comprising:
- pulping recovered release liner material in water-based solution in order to release at least some silicone particles to said water-based solution,
- removing at least some of said silicone particles from the water-based solution by using a flotation step,
- removing at least some impurities from the pulped release liner material in a screening step and/or a cleaning step, and
- removing at least some water from said pulped release liner material in order to form recycled release liner pulp.

According to an embodiment, the method further comprises:
- bleaching the recycled release liner pulp in order to form bleached recycled release liner pulp.

Release liner waste material may be used, for example, for landfill or incineration. However, recyclability and use of less virgin raw materials is valued in the production.

Due to the novel solution, it is possible to obtain a backing material layer for a release liner, which backing material layer comprises recycled release liner as a raw material and has still suitable strength properties. Further, it is possible to obtain a backing material layer for a release liner, which backing material layer has substantially even colour and comprises recycled release liner as a raw material.

Further, the novel product can be used as a backing material in an automated high-speed labelling process. The mechanical properties of the novel release liner, such as surface smoothness, surface density and tearing resistance, are suitable for the release liner to function properly. In addition, even when recycled release liner is used in the backing material layer of a release liner, the colour of the manufactured product is still in desired range.

### Brief description of the drawings

In the following, the invention will be illustrated by drawings in which
- Fig. 1: shows, by way of an example, a label laminate comprising a release liner, an adhesive layer and a face layer,
- Fig. 2: shows, by way of an example, a release liner comprising a backing material layer and a release coating layer,
- Figs 3a-3b: show, by way of an example, a method for manufacturing a bleached recycled release liner pulp for a release liner,
- Figs 4a-4b: show, by way of an example, a method for manufacturing a backing material layer for a release liner,
- Figs 5a-6c: show test results of a manufactured product, in accordance with an embodiment.

The drawings are schematic.

### Detailed description

The following reference numbers are used in this application:
- LABEL1: label laminate,
- RELR: recovered release liner material,
- REL1: release liner comprising bleached recycled release liner pulp,
- PAP2: paper comprising bleached recycled release liner pulp,
- PAP1: backing material layer comprising paper PAP2,
- PAPCT2: coating on the paper PAP2,
- FACE1: face layer,
- RELCT1: release coating layer,
- ADH1: adhesive layer,
- PULPV1: virgin chemical pulp,
- PULP2: virgin and/or recycled pulp(s),
- RELP1: pulped recovered release liner material, i.e., recycled release liner pulp,
- BRELP1: bleached pulped recovered release liner material, i.e., bleached recycled release liner pulp,
- MIX1: mixture comprising virgin pulp(s) and recycled release liner pulp,
- MIXV1: mixture comprising bleached virgin pulp(s),
- WEB1: paper web formed from the pulp mixture MIX1,
- 10: dilution step,
- 20: bleaching step,
- 30: screening step,
- 40: mixing step,
- 110: dilution step of the de-siliconizing process,
- 120: flotation and/or washing step(s) of the de-siliconizing process,
- 130: screening step of the de-siliconizing process, and
- 140: thickening step of the de-siliconizing process.

In this application the term "label laminate" LABEL1 refers to so called pressure sensitive label laminates and self-adhesive label laminates. The label laminate LABEL1 can comprise two layers which are laminated together, i.e. a release liner REL1 and a face layer FACE1, wherein an adhesive layer ADH1 is provided between the release liner REL1 and the face layer FACE1.

The term "face layer" FACE1 refers to "the top layer" of the label laminate, also called as the face stock. The face layer FACE1 comprises at least one layer that is attached to another surface with an adhesive layer ADH1, when the label laminate LABEL1 is used. The face layer FACE1 may consist of plastic layer(s), for example polypropylene film(s) and/or polyethylene film(s). The product consisting of the face layer(s) FACE1 and the adhesive layer(s) ADH1 is called a linerless label. In other words, it is not same product as the label laminate LABEL1, which also comprises the release liner REL1.

The term "release liner" REL1 refers to a product comprising a backing material layer PAP1 as base material and at least one release coating layer RELCT1 on the backing material layer PAP1. In other words, the backing material layer PAP1 may be coated with a thin layer of release agent, such as silicone. Therefore, the release liner REL1 may be easily removed from the face layer FACE1 when the label is adhered to a substrate. The release liner REL1 is used to protect the adhesive layer ADH1 of the label laminate LABEL1 and to allow efficient handling up to the point where the label is dispensed and adhered to a substrate surface.

A release liner comprising a plurality of adhesive labels is referred to as a label stock. A label stock may be wound on a roll and used in a labelling process. The number of products to be labelled in a labelling process may be very large. A roll of release liner may comprise even several kilometres of winded release liner.

The term "backing material layer" refers to a paper suitable for use as a layer of a release liner. The paper is typically manufactured on a paper machine.

The term "label" refers to a die-cut face layer.

The terms "pulped recovered release liner material" and "recycled release liner pulp" RELP1 refer to pulp comprising recovered release liner material that is re-pulped in order to be reused as raw material in another release liner product. The recycled release liner pulp is preferably de-siliconized.

Unless otherwise stated, the following standards (valid in 2017) refer to methods which may be used in obtaining stated values of parameters representing paper or pulp quality:

| **Parameter** | **Standard** |
|---|---|
| Grammage | ISO 536 |
| Thickness | ISO 534 |
| Smoothness, Bekk | ISO 5627 |
| Water absorptiveness, Cobb | ISO 535 |
| Tensile strength, strain at break, tensile energy absorption | ISO 1924-3 |
| Internal fiber bond strength (i.e. z-direction tensile strength) | TAPPI T541 |
| Roughness, PPS | ISO 8791 |
| ISO brighness | ISO 2470 |
| CIE whiteness (D65/10°) | ISO 11475 |
| CIE tint (D65/10°) | ISO 11475 |
| Transparency | ISO 2469 |
| Opacity | ISO 2471 |
| colour of paper (C/2°) | ISO 5631 |
| colour of paper (D65/10°) | SCAN-P 72:95 |
| pH of aqueous extracts | DIN 53124 (BS 2924: Part 1 :1983, ISO 6588-1981 ) |
| Dry content | SCAN-P 39:80 |
| Viscosity | SCAN-P 50:84 |
| Klemm | ISO 8787 |

Thickness of a paper, such as a backing material layer PAP1, unless otherwise stated, refers to the apparent thickness, determined as single sheet thickness of a paper according to ISO 534:2011.

When a release coating layer RELCT1 is applied on a backing material layer PAP1, referring to an uncoated paper, the thickness of the paper denotes the final thickness of the backing material layer PAP1 in micrometers. When a release coating is applied on a backing material layer PAP1, referring to a paper PAP1 having a coating PAPCT2 on the paper PAP2 of such as a surface sized or coated layer, the thickness of the paper denotes the final thickness of the backing material layer PAP1 comprising the coating CPAP2 on paper PAP2 in micrometers.

The final thickness of a backing material layer denotes the thickness of the backing material layer PAP1 after all treatments, including for example a calendering treatment when calendering is used such that the thickness of the backing material layer is reduced. However, the final thickness of the backing material layer is measured prior to applying a release coating in order to form release liner.

The backing material layer PAP1 may be calendered to a final thickness before forming a release liner REL1 by applying the release coating. When the backing material layer PAP1 is, however, not calendered prior to applying a release coating such that a release liner REL1 is formed, the final thickness refers to the thickness of the backing material layer.

The thickness of a paper is also referred to as the caliper of a paper. The thickness is expressed in micrometers (µm). A paper manufactured on a paper machine has compressibility and inhomogeneity, therefore the thickness may be given as an averaged value of several measurements results from a paper sample, as described in the standard ISO 534. The thickness of a paper is related to the grammage of paper. To compare the thickness of papers with different grammage, the specific volume may be used. Thickness of a release liner, unless otherwise stated, refers to the apparent thickness, determined as single sheet thickness of a paper according to ISO 534:2011, of the release liner comprising the layers present in the release liner. Typically, the release liner comprises a release coating layer RELCT1 and a backing material layer PAP1, wherein the backing material layer PAP1 may comprise one or more coating layers PAPCT2 on the paper PAP2. The release liner REL1 may comprise a release coating layer RELCT1 and a backing material layer PAP1.

In a release liner REL1, the thickness of the backing material layer PAP1 may be determined by subtracting the thickness of the release coating layer RELCT1 from the thickness of the release liner REL1.

Specific volume, denoted as bulk, is measured as volume per unit mass, typically expressed in cubic centimeters per gram (cm³/g). Specific volume in this context refers to apparent specific sheet volume. Specific volume therefore represents inverse of the paper density. Paper density in this context refers to mass per unit volume of a backing material layer, typically expressed in kilograms per cubic meters (kg/m³). The specific volume and density are calculated from a single sheet thickness of paper according to ISO 534:2011.

The density of a backing material layer PAP1 comprising recycled release liner pulp may be equal to or less than 1300 kg/m³, preferably in the range of 1000 to 1200 kg/m³, most preferably in the range of 1035 to 1150 kg/m³.

Paper grammage in this context refer to the basis weight of the paper, given in grams per square meter (g/m²) of the paper. The backing material layer PAP1 suitable for a release liner REL1 preferably have a grammage equal to or less than 120 g/m², preferably equal to or less than 80 g/m², most preferably equal to or less than 70 g/m². The backing material layer PAP1 suitable for a release liner preferably has a grammage equal to or higher than 30 g/m², such as equal to or higher than 40 g/m², for example in the range of 30 to 120 g/m², or in the range of 40 to 100 g/m². The backing material layer PAP1 having a grammage in the range of 40 to 80 g/m², most preferably in the range of 50 to 70 g/m², benefit of the increase in bulk.

Roughness of the paper PAP2 and the backing material layer PAP1, can be determined by Parker Print-Surf (PPS) method according to ISO 8791, for example by using a PPS tester. A PPS tester uses a contact air leak principle, which measures airflow between substrate in a ring having an aperture.

Water absorptiveness of the backing material layer PAP2 can be given as Cobb values determined according to ISO 535. The standard specifies a method of determining the water absorptiveness of sized paper under standard conditions.

Fiber furnish analysis according to ISO standards ISO 9184-1 and 9184-4:1990 may be used in identification of papermaking fibers from a paper. The analysis may be used, for example, to distinguish cellulose fibers produced by chemical, semi-chemical, such as chemithermomechanical, or mechanical method from each other. The analysis may further be used, for example, in differentiation of cellulose fibers produced by Kraft or sulphite process in hardwood pulps and in differentiation of cellulose fibers from softwood and hardwood from each other. Metso Fiber Image Analyzer (Metso FS5) is an example of a device, which can be used according to the manufacturer's instructions to perform the fiber furnish analysis. For example, a high-resolution camera may be used to acquire a greyscale image of a sample, of which image the properties of the fibers in the sample may be determined. The greyscale image may be acquired from a sample placed in a transparent sample holder, such as a cuvette, using a 0.5 millimetre depth of focus according to ISO 16505-2 standard. The wood species used in a paper may be distinguished by comparison method, wherein a sample fiber is compared against a known reference fiber. Fiber length may be determined according to ISO 16065-N.

In release liner manufacturing, paper quality and suitability for coating with a silicon polymer-based compound (i.e. release coating) may be determined based on the smoothness, density, porosity and transparency of the paper.

Bekk method may be used for determining the smoothness and/or porosity of backing material layer for release liner. For the Bekk method, ISO 5627 standard may be used. Gurley method may be used for determining the air permeability of paper. For the Gurley method, ISO 5636-5:2013 standard may be used.

Schopper Riegler (SR) Freeness and Canadian Standard Freeness are tests used to measure the extent of refining of a pulp. Refining, and in particular refining to a high degree, may sometimes be referred to as beating. Refining reduces the average fiber length of cellulose, which decreases the tear strength of a paper formed from the pulp. Refining also leads to fibrillation, wherein the cellulose fiber bundles conventionally tightly bound by hydrogen bonds become separated to some extent. The detachment of hydrogen bonds between fibers increases the pulp surface area and enables hydrogen bonding between fibers and water. The increased pulp surface area leads to hydration and the pulp absorbs water and swells. Refining typically increases the tensile and reduces the tearing strength of a paper formed from the pulp due to higher surface areas and increased hydrogen bonding between fibers.

The amount of mechanical energy used in refining correlates with the reduction of fiber length and fibrillation. By using more energy, fibers having shorter average fiber length and increased surface area may be obtained. This enables formation of a dense and smooth paper surface. The amount of mechanical energy used in refining correlates with the water drainage resistance, which may be measured by the Schopper Riegler (SR) Freeness test. The Schopper Riegler (SR) Freeness test provides an empirical measurement value of the drainage resistance of a pulp slurry. A higher Schopper Riegler (SR) Freeness test value indicates higher amount of water to be removed from a formed paper web during the release liner manufacturing process. The Schopper Riegler (SR) Freeness value represents the inverse of the volume of water collected divided by ten. The Schopper Riegler (SR) Freeness value may be determined using a SCAN-C 19:65 test method. The Canadian Standard Freeness represents the drainability of a pulp suspension in water in milliliters (ml). The Canadian Standard Freeness value may be determined using an ISO 5267-2:2001 test method.

The backing material layer PAP1 comprises a cellulose fibre-based support layer, i.e. paper PAP2. The backing material layer PAP1 may comprise a sizing layer or a coating layer, applied on at least one side of the uncoated paper PAP2.

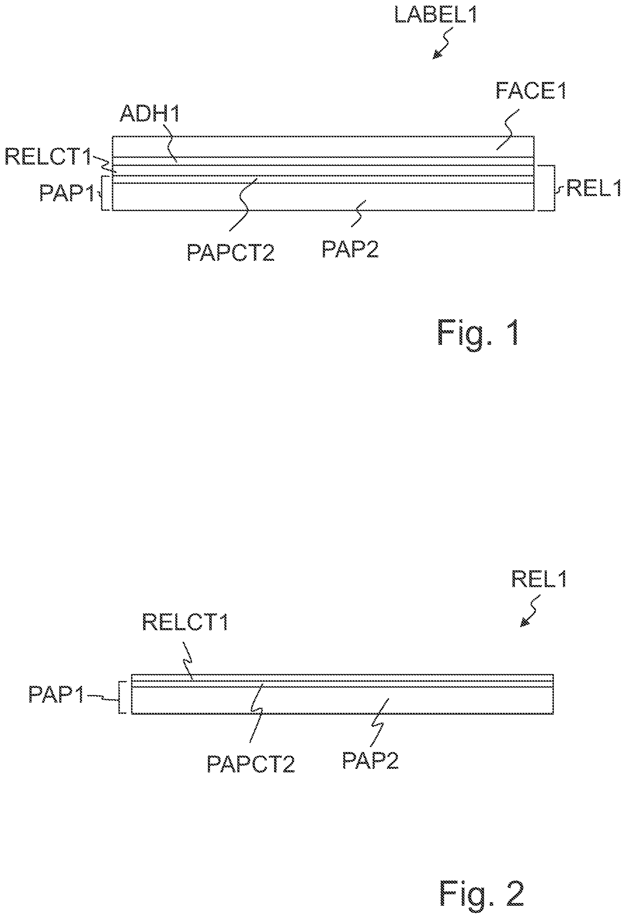

Figure 1 presents an example of the label laminate LABEL1. The label laminate LABEL1 comprises a face layer FACE1, a release liner REL1 and an adhesive layer ADH1 between said layers. The release liner REL1 refers to a product comprising typically a backing material layer PAP1 and a release coating layer RELCT1. It is possible to apply the adhesive layer ADH1 on the face layer FACE1 and/or on the release liner REL1.

The label laminate LABEL1 preferably consists of the release liner REL1 and the face layer FACE1, which are laminated together with the adhesive layer(s) ADH1 in between. The release liner comprises at least the backing material layer PAP1 and the release coating layer RELCT1. After removal of the release liner REL1, the label (comprising the face layer FACE1) can be attached to the surface of an item through said at least one adhesive layer ADH1.

When the label laminate LABEL1 is used, the adhesive layer ADH1 bonds the label to the surface of an item. The structure of the label may have one adhesive layer or a multilayer adhesive structure including additional adhesive layer(s). The adhesive layer is applied on the face layer FACE1 and/or on the release liner REL1 during the manufacturing process of the label laminate LABEL1. The adhesive layer ADH1 of the produced label laminate LABEL1 may have a thickness of at least 10 microns or 12 microns, preferably at least 14 microns or 16 microns. Advantageously, a thickness of the label laminate LABEL 1 is not greater than 40 microns or 35 microns, preferably not greater than 30 microns, more preferably not greater than 25 microns or 20 microns. The thickness of the adhesive layer may be, for example, between 16 and 20 microns. Therefore, it is possible to obtain an adhesive layer that is good enough to attach the label to the surface of an item without being too expensive.

The amount of the adhesive used in the label laminate may be, for example, 16 to 22 g/m² (dry grammage).

Figure 2 presents an example of a release liner REL1 (shown also in Figure 1) that is suitable for a label laminate LABEL1 (shown in Figure 1). The release liner REL1 comprises a backing material layer PAP1 and a release coating layer RELCT1. There may be at least one adhesive layer on the release liner REL1 (not shown in Figure 2).

The release liner REL1 is a paper based liner having a paper based backing material layer PAP1. The release liner REL1 can be used to prevent a sticky surface from prematurely adhering. The backing material layer PAP1 is preferably coated on one side, or both sides, with a release agent to form a release liner REL1 comprising a release coating layer RELCT1.

The backing material layer PAP1 comprises a cellulose fibre-based support layer, i.e. the paper PAP2. The cellulose fiber-based support layer refers to a paper containing cellulose fibers. The backing material may comprise, for example, coated papers, vegetable parchment, glassine and greaseproof paper. Examples of papers used as a backing material layer PAP1 are Super Calendered Kraft paper (SCK) and glassine paper. Other examples for papers used as a backing material layer PAP1 are coated papers such as Clay Coated Kraft paper (CCK) and Machine Finished Kraft paper (MFK) and Machine Glazed paper (MG). Of these, glassine is preferred for industrial manufacturing of high quality release liner REL1, due to the mechanical properties of the paper obtained in the manufacturing process.

Vegetable parchment paper is a paper typically made of waterleaf sheet (unsized sheet of paper, made from chemical wood pulp) by treating it in a bath of sulfuric acid. The treated paper is washed thoroughly to remove the acid and then dried. This chemical treatment forms a very tough, stiff paper with an appearance similar to a genuine parchment. However, a paper treated in this manner has a tendency to become brittle and to wrinkle upon drying. Vegetable parchment is therefore preferably treated with a plasticizing agent, such as glycerine or glucose.

Coated papers comprise variety of papers, having in common a coating layer applied on the paper surface and then calendered to modify the surface properties of the product. Coated paper which may be used as backing material layer PAP1 of the release liner REL1 is typically so called "woodfree" coated paper, made of chemical pulp, such as Kraft pulp. A coat weight in the range of 5 to 12 g/m² per side (on one or both sides) is preferably used. The coating layer typically comprises pigments, such as calcium carbonate and/or kaolin, and binders, such as starch and/or polyvinyl alcohol and/or latex.

Glassine paper is widely used in release liner for self-adhesive materials. Glassine is typically made of bleached chemical pulp, having preferably a grammage in the range of 30 to 160 g/m². Glassine used for manufacturing a release liner is typically coated with a coating layer which is compatible with a silicone polymer based release coating. A coating in the range of 1 to 10 g/m² per side, typically in the range of 2 to 5 g/m² per side, is used. A mixture used to form said coating layer for glassine may comprise water soluble binders such as starch and/or polyvinyl alcohol and/or carboxymethyl cellulose. When producing glassine paper, the pulp is typically refined to obtain a fiber fineness, which enables a dense, nearly unporous, paper surface to be obtained. Such a surface is typically resistant to air and liquids such as oil and water. When manufacturing glassine paper, the pulp slurry is typically first refined to a high level, the formed paper web is then pressed and dried, and the coating is applied on the paper web surface. Glassine is typically calendered with a multi-nip calender or a supercalender before or after applying the primer layer, to obtain a product having high density surface, high impact strength, high tear resistance and transparency. Glassine, however, has typically a lower dimensional stability than a conventional coated paper. Therefore, shrinkage of the formed fiber web when manufacturing glassine paper is typically higher than with conventional coated paper.

Greaseproof paper is similar to glassine in grammage. The main difference between greaseproof paper and glassine is in the calendering treatment. While glassine is typically supercalendered, greaseproof paper is not. Hence, greaseproof paper has typically a diminished tearing resistance when compared to glassine.

In this context, cellulose pulp refers to material originating from wooden material, which has been processed into fibrous form, such as fibers, using chemical, mechanical, thermomechanical, or chemithermo - mechanical pulping process(es).

The term "cellulose raw material" refers to wood material that can be used in a production of cellulose pulp. The wood material can be from softwood trees, such as spruce, pine, fir, larch, douglas-fir and/or hemlock, or from hardwood trees, such as birch, aspen, poplar, alder, eucalyptus and/or acacia, or from a mixture of softwoods and hardwoods.

Depending on the processing method, the cellulose pulp may have been obtained via mechanical methods, chemical methods, or by using a semi-chemical method, wherein a combination of mechanical and chemical methods is used.

Chemical pulp refers to cellulose pulp obtained from a process wherein fibers have been produced through chemical methods. Chemical pulp is preferably bleached to form bleached chemical pulp. When forming chemical pulp, heat and chemicals are used to break down lignin, which binds the cellulose fibers together, such that the cellulose fibers are degraded to a less degree than in mechanical pulp. Chemical methods may be used to provide fibers having increased strength. Chemical pulp is typically stronger than pulp produced via other methods. Examples of a chemical methods are, for example, Sulphite process and Kraft process. Kraft process uses sodium sulphide to separate cellulose fibers from other compounds in the wood material. Unbleached Kraft pulp typically has a dark brown color. For release paper purposes, unbleached chemical pulp is preferably bleached to further remove residual lignin, which increases the pulp whiteness and brightness, and improves the transparency of paper made of the bleached chemical pulp.

Mechanical pulp refers to cellulose pulp obtained from a process wherein fibers have been produced through mechanical methods. Examples of a mechanical method are, for example, grinding-stone ground wood (SGW), pressure ground wood pulp (PGW) and thermomechanical pulp (TMP).

When the wood is steamed prior to grinding it is known as pressure ground wood pulp (PGW). Steam treatment may be used to reduce the amount of energy needed in pulping and to decrease the mechanical damage of the process to the fibers. Compared to chemical pulping, mechanical pulping typically gives a higher yield of cellulose in a pulp form. The yield of mechanical pulp may be in the range of 85 to 95 wt.-% of the raw material. As pulping by a mechanical method does not comprise a chemical treatment, mechanical pulp contains large number of fine particles, hemicellulose and lignin compounds. Mechanical pulp therefore has a high opacity level. Mechanical pulp may also have limited brightness, at least compared to chemical pulps. Mechanical pulp containing lignin compounds may react with light and oxygen, which leads to darkening of the pulp colour, denoted as photo yellowing. Mechanical pulp has a broad fiber size distribution, which may be used to improve paper surface smoothness. Mechanical pulp may also be used to improve the bulk of the paper. The tensile and tear strength of mechanical pulp is relatively weak; as such it typically is not suitable for release liners. Mechanical pulp may be bleached to form bleached mechanical pulp.

Thermomechanical pulp, abbreviated as TMP, is one kind of mechanical pulp produced by processing wood chips using heat and a mechanical refining. In thermomechanical pulping, mechanical force such as crushing or grinding is applied to wood chips having typically a moisture content in the range of 25 to 30 wt.-%, such that heat and water vapour is generated, which softens the lignin in the chips such that the chips are separated into fibers. The pulp may then be screened and cleaned, and the operation may be repeated to remaining chips until a desired fibrillation level is obtained. The yield of thermomechanical pulp may be in the range of 85 to 95 wt.-% of the raw material. Compared to a chemical pulping process, when manufacturing thermomechanical pulp, the aim is to facilitate the refining of the fibers, not to remove lignin. Due to the lignin present in the thermomechanical pulp, the fibers may be hard and rigid. Thermomechanical pulp may be bleached to form bleached thermomechanical pulp.

Chemithermomechanical pulp, abbreviated as CTMP, is a hybrid process wherein the wood chips are first pre-treated by applying chemicals on the chips and then refined to pulp by mechanical means. In chemithermomechanical pulping, wood chips are typically pre-treated with sodium carbonate, sodium hydroxide, sodium sulphite and/or other chemicals prior to mechanical refining, such that heat and water vapour is generated, which softens the lignin in the chips such that the chips are separated into fibers. The mechanical refining may be done with equipment similar to used when obtaining mechanical pulp. When manufacturing chemithermomechanical pulp, the conditions of the chemical treatment are less vigorous than in a chemical pulping process. Typically, a lower temperature, shorter duration and less extreme pH is used. As in thermomechanical pulp, the aim is to facilitate the refining of the fibers, not to remove lignin. Chemithermomechanical pulp therefore may comprise lignin and other wood originating compounds in addition to cellulose fibers. Bleached chemithermomechanical pulp, abbreviated as "BCTMP", may be produced from chemithermomechanical pulp by bleaching, to increase the brightness and whiteness of the paper produced from the pulp. Bleached chemithermomechanical pulp may be arranged to increase the specific volume per unit area of the forming paper web.

The processing method of chemical pulp, while providing strong cellulose fibers, requires large amounts of wood. The bleached chemical pulp is furthermore generally refined to a high level, to improve the smoothness and density of the paper surface, which is a cost factor in manufacturing. The refining requires energy, which also increases the production costs.

A drawback of the refining is that while reduction of the average fiber length of the cellulose fibers in the pulp improves the subsequent surface density of a paper, refining also decreases the specific volume of the formed paper as shorter fibers may be packed closer in the paper web. Refining also increases the moisture uptake of the pulp such that larger amounts of water needs to be removed from the paper web.

The pulp used for the backing material layer PAP1 preferably comprises bleached recycled release liner pulp BRELP1. The bleached recycled release liner pulp BRELP1 is preferably mixed with bleached virgin pulp(s), most preferably at least with bleached chemical pulp, such that a pulp mixture comprising bleached virgin pulp(s) and bleached recycled release liner pulp BRELP1 is formed.

The chemicals used to bleach virgin pulp(s) may comprise various oxidising compounds such as chlorine dioxide and/or oxygen and/or ozone and/or hydrogen peroxide.

The paper may be manufactured in an alkaline pH, such as equal to or higher than pH 7, to improve the runnability of the paper manufacturing process. However, the paper may be manufacture also in pH less than 7.

When manufacturing paper comprising the recycled release liner pulp suitable for a release liner, the bleached recycled release liner pulp can be mixed with bleached Kraft pulp, such that a pulp mixture MIX1 comprising bleached Kraft pulp and bleached recycled release liner pulp is formed.

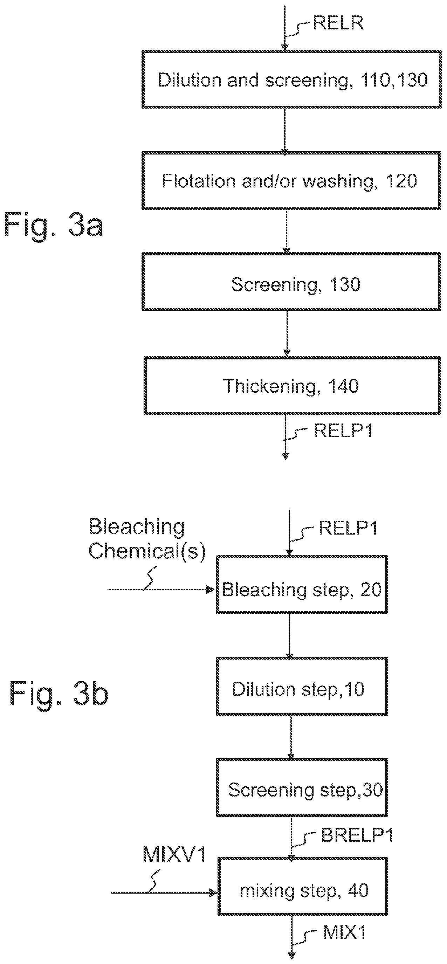

Figs 3a-b show, by way of an example, a method for manufacturing the recycled release liner pulp RELP1 suitable for use as a raw material for a release liner REL1 (shown in Figures 1 and 2).

Fig. 3a shows, by way of an example, a de-siliconizing process of recovered release liners REL.

Conventionally, paper PAP2 for the backing material layer PAP1 has been made of virgin chemical pulp(s).

In accordance with an embodiment, the backing material layer PAP1 comprises recovered release liner material. Due to the recycled raw material, the bleached recycled release liner pulp may comprise different fiber length distribution compared to virgin pulp. Typically, recycled fibers are shorter than virgin fibers.

Release liners may comprise different kind of fillers, coatings, adhesives etc. Moreover, release liners are available in different colors. Therefore, the recovered release liner material may contain several raw materials in different colors. In addition, the recovered release liner material may comprise printing colors.

Further, the recovered release liner material typically contains release coating agent(s), such as silicone. Therefore, conventionally the reuse of the recovered release liners has been too challenging and recovered release liners are typically used for landfill or incineration.

Due to the novel solution, the recycling of release liners may be used to help to minimize solid waste and to maximize the reuse of raw materials. In addition, the novel solution may help to minimize water pollution and air pollution.

In accordance with an embodiment, the recovered release liner material is de-siliconized in order to form recycled release liner pulp RELP1.

The recovered release liner material can be repulped in a water-based solution to release at least some of the silicone from the fibres to the water-based solution. During the process, the recovered release liner can be mixed with chemicals and chopped up and heated to form the recycled release liner pulp having reduced silicone content.

In accordance with an embodiment, a flotation process is used to remove at least some of the released silicone particles from water-based solution comprising the recovered release liner material.

In accordance with an embodiment, the de-siliconizing process has at least one screening step 130. In addition, the de-siliconizing process can comprise at least one thickening step 140. In addition, the de-siliconizing process can comprise at least one flotation step 120.

The de-siliconizing process preferably comprises at least some of the following steps, more preferably all following steps 1 to 5:
1. pulping,
2. screening and/or cleaning,
3. flotation and/or washing,
4. screening and/or cleaning, and
5. thickening and/or washing.

The above-mentioned steps can comprise some or all of the following features:
1. Pulping. The pulping step can be implemented with a pulper. The recovered release liner material can be fed, most preferably with chemicals, to the pulper. The consistency of the pulp is preferably between 7 and 25 %, more preferably between 10 and 20 %.
2. Screening and/or cleaning. The formed pulp can be screened in the screening section. Advantageously, the pulp is diluted to a 1-10 % consistency, more preferably to a 2-7 % consistency. Screening section can comprise several screening steps, preferably the screening section comprises at least primary and secondary screens, most preferably the screening section further comprises tertiary screens.
3. Flotation and/or washing. The silicone can be released from the fibers to the water based solution, after which the silicone is at least partly removed, preferably in a flotation and/or washing step(s). The de-siliconizing process can comprise a flotation step to remove silicone particles from the recycled release liner pulp. Flotation may be implemented with flotation cells. Consistency during the flotation stage can be between 0.4 and 2.5%, more preferably between 0.6 and 1.8 %. Air can be injected into the water-based solution comprising the recycled release liner pulp and, thus, silicone particles may attach themselves to air bubbles and, hence, rise to the surface. Therefore, at least some of the silicone particles can be removed. The process temperature may be about 50°C. In an example, the process temperature is between 45 and 55°C.
3. Screening and/or cleaning. The recovered release liner pulp can be screened and/or cleaned using, for example, centrifugal cleaner(s) and/or pressure screen(s). The screen(s) and/or cleaners are preferably situated after the flotation step. Screens may be used, for example, to remove small impurities which the silicone may still be binding. Screening can be implemented with at least one pressure screen. Advantageously, at least one centrifugal cleaner is used to remove heavy and/or light impurities.
4. Thickening and/or washing. The recovered release liner pulp can be thickened, and it may be washed. At least one of the following:
   - disc filter,
   - drum filter,
   - gravity thickener,
   - gap washer thickener,
   - wire press,
   - screw press, and/or
   - roll press
   can be used for the thickening. Preferably at least one disc filter is used for the thickening stage, because it may be the least expensive device for the purpose. Alternatively or in addition, at least one screw press and/or at least one drum press is used due to their good effectiveness.

Furthermore, the de-siliconizing process can comprise dispersing/ deflaking step between the first screening and/or cleaning and the flotation steps.

Not only the above-mentioned process steps, but also other steps may be included to the de-siliconizing process, such as a post-flotation and a final thickening step(s).

During the de-siliconizing process, the pH can be adjusted. In an example, pH is, for example, between 8.5 and 10.

After the re-siliconizing process, the de-siliconized recycled release liner pulp can be finally baled.

The recycled release liner pulp RELP1 can be bleached in order to form bleached recycled release liner pulp BRELP1. The bleaching of the recycled release liner pulp is preferably implemented after the de-siliconizing process.

The bleaching step of the recovered and pulped release liner RELP1 may be implemented, for example, in de-siliconized pulp towers and/or during the manufacturing process of the paper PAP2.

Most preferably, the recycled release liner pulp is bleached during the manufacturing process of the paper PAP2. This may decrease manufacturing costs and increase the production efficiency.

At least some of the bleaching chemical(s) can be dosed during the manufacturing process of the paper PAP2 used for the backing material layer PAP1. Advantageously, the de-siliconized recycled release liner pulp RELP1 is bleached at least partly before the recycled release liner pulp is mixed with at least one virgin pulp to form mixture MIX1.

Fig. 3b shows, by way of an example, a bleaching process of the recovered and pulped release liner.

During the manufacturing of the backing material layer PAP1, a pulper may be used to chop the de-siliconized recycled release liner material into small pieces in a water-based solution. Preferably, mixture is warmed to break the recovered and pulped release liner more quickly into fibers. In an example, a temperature between 45 and 55 °C is used during the pulping step.

The paper of the backing material layer PAP1 may, in an example, be manufactured in an alkaline pH, such as equal to or higher than pH 7, to improve the runnability of the paper manufacturing process. However, the pH may also be equal to or lower than 7.

The recycled release liner pulp RELP1 is bleached before it is used for the backing material layer PAP1. Advantageously, the recycled release liner pulp fibers are bleached to achieve a backing material layer PAP1 comprising recycled fibers from recovered release liners, wherein single recycled fibers cannot easily be seen from the backing material layer PAP1.

The recycled release liner pulp RELP1 can be bleached by using at least one of the following chemicals, for example one, two or three of the following chemicals:
- hydrogen peroxide H₂O₂,
- sodium dithionite Na₂S₂O₄,
- sodium bisulfite NaHSO₃,
- sodium borohydride solution.

These chemicals may be used to achieve a good bleaching efficiency together with substantially small implementation costs. Preferably exactly one or exactly two of the above-mentioned chemicals is used in order to achieve substantially small implementation costs. Advantageously, the sodium dithionite and/or the sodium borohydride solution is used to achieve a good bleaching efficiency together with substantially small production costs.

The sodium borohydride solution may comprise NaBH₄, NaOH and water. It may comprise, for example, 12% NaBH₄, 40% NaOH and 48% water. Typically, sodium borohydride solution [NaBH₄ + 3.2 NaOH] + 4.8 NaOH + 8 SO₂ → 4 Na₂S₂O₄ + NaBO₂ + 6 H₂O, generally [NaBH₄ + 3.2 NaOH] represents sodium borohydride solution containing about 12% NaBH₄, about 40% NaOH and about 48% water. One example of such generally used commercially available solution is Borino^{®} (Kemira Chemicals Oy).

The bleaching step of the recovered and pulped release liner can be implemented by dosing the sodium bisulfite and the sodium borohydride solution as bleaching chemicals to the recovered and pulped release liner in order to form the bleached recycled release liner pulp BRELP1. The usage of these chemicals may help to reduce the implementation costs. In addition or alternatively, hydrogen peroxide and/or sodium dithionite may be used as bleaching chemical(s) for the recovered and pulped release liner.

Alternatively, for example, chlorine dioxide and/or oxygen and/or ozone and/or peroxyacid may be used for the bleaching step of the recovered and pulped release liner. However, they may not be as good for the bleaching step of the recovered and pulped release liner as the above-mentioned chemicals, because, among other things, they may cause poorer production efficiency than the above-mentioned chemicals due to, for example, high implementation costs. In addition, a usage of hydrogen peroxide H₂O₂ and/or sodium dithionite Na₂S₂O₄ and/or sodium bisulfite NaHSO₃ and/or sodium borohydride solution for the bleaching step of the recovered and pulped release liner may help to achieve better production efficiency than a usage of chlorine dioxide, oxygen, ozone and/or peroxyacid because the first mentioned chemicals may also be easier to control during the bleaching process and they may have lower production costs.

Most advantageously, sodium dithionite is used as the bleaching chemical for the recycled release liner pulp. The dosage of the sodium dithionite can be at least 0.10 % wt.-%, more preferably at least 0.15 wt.-%, and most preferably at least 0.20 wt.-% calculated from the total dry weight of the recycled release liner pulp. Further, the dosage of the sodium dithionite can be 1.00 wt.-% at the most, more preferably 0.50 wt.-% at the most, and most preferably 0.35 wt.-% at the most calculated from the total dry weight of the recycled release liner pulp. Advantageously, a dosage of the sodium dithionite is between 0.10 and 1.00 wt.-%, more preferably between 0.15 and 0.50 wt.-%, and most preferably between 0.20 and 0.35 wt.-%, or between 0.20 and 0.30 wt.-% calculated from the total dry weight of the recycled release liner pulp. Therefore, it is possible to achieve desired whiteness of the manufactured product with a method that may have good production efficiency.

Thus, the method can comprise the following step:
- letting the sodium dithionite react with the recycled release liner pulp at least 4 minutes, more preferably at least 8 minutes and most preferably at least 12 minutes in order to increase whiteness of said pulp.

There is typically no need to let the sodium dithionite react with the recycled release liner pulp more than 30 min or not even more than 20 minutes. Therefore, the method can comprise the following step:
- letting the sodium dithionite react with the recycled release liner pulp between 4 and 30 minutes, more preferably between 8 and 20 minutes and most preferably between 10 and 20 minutes in order to increase whiteness of said pulp.

The recycled release liner pulp RELP1 can have at least one screening stage during the manufacturing process of the paper PAP2 of the backing material layer PAP1 in order to minimize the number of flocs in the recycled release liner pulp RELP1 flow.

Most advantageously, the recycled release liner pulp has at least one screening stage after the bleaching step during the manufacturing process of the paper PAP2. Alternatively or in addition, the recycled release liner pulp has at least one screening stage during the manufacturing process of the paper PAP2 before at least one bleaching step wherein at least one bleaching chemical is dosed.

Dry matter content of the recycled release liner pulp can be at least 2 % and, in addition, 7 % at the most, more preferably 6% at the most, and most preferably 5 % at the most, when at least one bleaching chemical is dosed to the recycled release liner pulp. Therefore, it is possible to obtain efficient bleaching result. The bleaching chemical(s) may be, for example, be applied to the recycled release liner pulp flow.

Advantageously, sodium dithionite is the used as bleaching chemical and the consistency of the pulp is at least 2 %, more preferably at least 3 % when the sodium dithionite is dosed to the system and, in addition, the consistency of the pulp is 6.5 % at the most, more preferably 6% at the most, and most preferably 5 % at the most, when the sodium dithionite is dosed to the system. Therefore, it is possible to obtain efficient and cost friendly solution for the bleaching step of the recycled release liner pulp.

The process temperature can be around 50 °C, for example between 40 and 60 °C, more preferably between 45 and 55 °C, when the bleaching chemical, for example sodium dithionite, is dosed.

Advantageously, the recycled release liner pulp RELP1 has at least one dilution step 10 and at least one screening step 30 which both can be situated after at least one bleaching step of the recycled release liner pulp during the manufacturing process of the paper PAP2. Therefore, because the dilution step 10 and the screening step 30 are situated after the bleaching step, it is possible to minimize the amount of needed bleaching chemicals for the bleaching of the recycled release liner pulp.

If the bleaching chemical is added before the dilution step situated before the screening step, the amount of the chemical(s) needed for the bleaching step may be reduced and, moreover, the possible problems caused by the bleaching chemicals at the paper machine may be avoided because the consistency of the bleaching chemicals in the system is very small after said dilution steps.

A method for manufacturing a paper for a release liner REL1 can comprise at least the following steps:
1. Pulping step of the de-siliconized recycled release liner pulp RELP1;
2. Bleaching step of said recycled release liner pulp RELP1;
3. Screening step of the bleached recycled release liner pulp BRELP1;
4. Mixing step 40 wherein the bleached recycled release liner pulp BRELP1 is mixed together with another raw material(s) in order to form the mixture MIX1.

The paper PAP2 is typically formed from the mixture MIX1 into a paper product.

The bleached recycled release liner pulp BRELP1 preferably comprises silicone 3.0 dry wt.-% at the most, more preferably 2.0 dry wt.-% at the most or 1.5 dry wt.-% at the most, and most preferably 0.5 dry wt.-% at the most or 0.3 dry wt.-% at the most. In addition, the bleached recycled release liner pulp may comprise silicone at least 0 dry wt.-%, at least 0.001 dry wt.-%, at least 0.01 dry wt.-%, or at least 0.1 dry wt.-%. The silicone content of the bleached recycled release liner pulp may be, for example, between 0 and 1 dry wt.-% or between 0.001 and 1.5 dry wt.-%. In order to obtain a release liner having good properties, the silicone content of the bleached recycled release liner pulp should preferably be very low. However, there may still be some impurities of silicone left in the final product. The backing material layer PAP1 can comprise silicone, for example, 2 wt.-% at the most, more preferably 0.5 wt.-% at the most, and most preferably 0.3 wt.-% at the most, for example between 0.0 wt.-% and 0.2 % wt.%

The amount of the bleached recycled release liner pulp BRELP1 in the pulp mixture MIX1 comprising preferably both, virgin pulp(s) and recycled pulp(s), may be varied.

The amount of the bleached recycled release liner pulp BRELP1 in said pulp mixture MIX1 can be at least 1 wt.-% and equal to or less than 50 wt.-% of the dry weight of the pulp mixture MIX1. Advantageously, the amount of the bleached recycled release liner pulp BRELP1 is 45 wt.-% at the most, or 40 wt.-% at the most, or 30 wt.-% at the most calculated from all fibers. The bleached recycled release liner pulp may be used for example in a range of 5 to 30 wt.-%, in the range of 8 to 25 wt.-%, or in the range of 10 to 20 wt.-% calculated from all fibers. Therefore, it is possible to obtain good properties for a release liner as well as use the recycled release liner pulp material.

The amount of the bleached recycled release liner pulp in the backing material layer PAP1 is preferably at least 1 wt.-% or at least 3 wt.-%, more preferably at least 5 wt.-% or at least 10 wt.-% and most preferably at least 15 wt.-% calculated from the total weight of the backing material layer PAP1. The manufactured backing material layer PAP1 may comprise bleached recycled release pulp 50 wt.-% at the most, or 30 wt.-% at the most, or 25 wt.-% at the most calculated from the total weight of the backing material layer PAP1. The bleached recycled release liner pulp may be used for example in a range of 1 to 30 wt.-%, in the range of 5 to 25 wt.-%, or in the range of 10 to 35 wt.-%, or for example between 3 and 25 wt.-%, or between 5 and 20 wt.-% calculated from the dry weight of the backing material layer PAP1. In an example, the amount of the bleached recycled release liner pulp in the backing material is at least 1 wt.-% and 25 wt.-% at the most. The usage of the recycled release liner fibers may reduce the needed amount of the virgin fibers. Furthermore, it may reduce water pollution and air pollution.

However, the backing material layer PAP1 may need many other components beside said recycled release liner pulp in order to obtain good runnability and good properties for the manufactured release liner product. However, from the all fiber sources in the backing material layer PAP1, the amount of the bleached recycled release liner pulp BRELP1 may be up to 100 wt.-%.

The purpose of a cellulose fibre-based support is to provide dimensionally stable and dense surface on which a release coating may be applied. The bleached recycled release liner pulp BRELP1 comprises cellulose-based fibers from wood material, such as fibers from softwood and/or hardwood. It may also comprise some other cellulose sources. Typically, the bleached recycled release liner pulp BRELP1 comprises at least recycled hardwood fibers from a Kraft process.

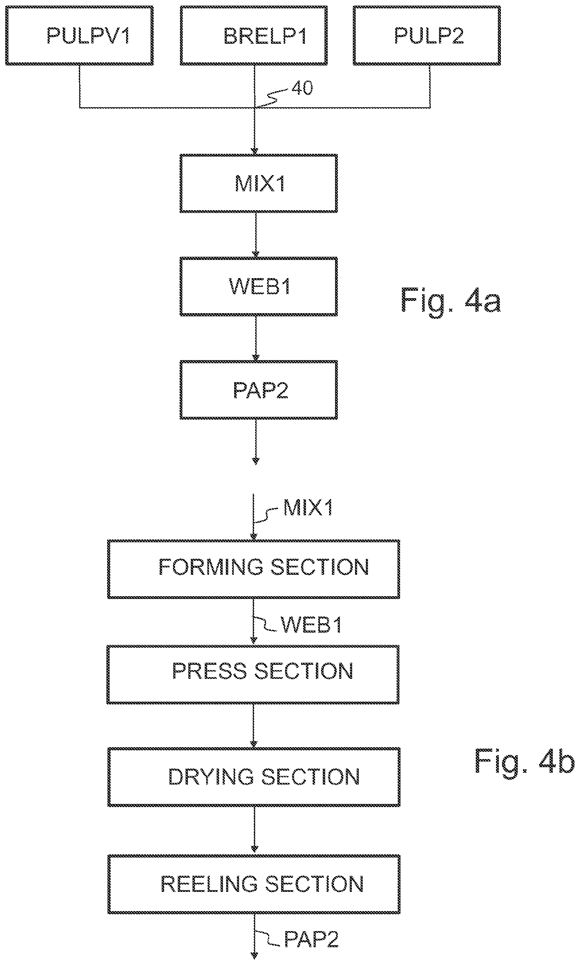

Figures 4a and 4b show, by way of an example, a method for manufacturing the backing material layer PAP1 (shown in Figures 1 and 2) comprising the recycled release liner pulp, the backing material layer suitable for use as a layer of the release liner REL1 (shown in Figures 1 and 2).

The paper PAP2 comprises cellulose fibers containing pulp, wherein the cellulose fibers preferably originate from wood. Wood species differ from each other in their mechanical properties and chemical compositions. The grammage of the paper is to a large extent defined already when the paper web is formed on the paper machine, when the pulp slurry is fed to a wire.

Wood species typically used in paper manufacturing may be divided into two main groups denoted as softwood and hardwood, wherein hardwoods have a more complex structure than softwoods. Softwood and hardwood have distinguished mechanical characteristics and chemical composition, which differ from each other. By selection of the wood species and the wood processing method, different types of pulp having different qualities may be obtained.

The wood material used for the backing material layer can be from softwood trees, such as spruce, pine, fir, larch, douglas-fir or hemlock, or from hardwood trees, such as birch, aspen, poplar, alder, eucalyptus or acacia, or from a mixture of softwoods and hardwoods.

The pulp used in the backing material layer PAP1 may comprise cellulose fibers from both hardwood and softwood. Pulp comprising a mixture of hardwood and softwood may be used to improve the internal bond strength of the paper web during manufacturing process.

Hardwood typically denotes wood wherein the average fiber length of cellulose fibers in a pulp is less than 2 millimetres, such as in the range of 0.7 to 1.8 millimetres, whereas softwood denotes species having a longer average fiber length of cellulose fibers in a pulp compared to the hardwood, such as in the range of 2 to 3 millimetres. For example, spruce has an average fiber length typically in the range of 2.2 to 2.5 millimetres in a pulpwood.

While hardwood is advantageous for increasing the brightness of the paper, softwood having a longer average fiber length may be used together with the hardwood in bleached Kraft pulp to improve the internal bond strength and facilitate the formation of the paper web suitable for release liner. The combination of bleached chemical pulp comprising hardwood and softwood may also be used to improve the burst strength and tensile strength of the paper.

Due to the desired brightness and transparency, the amount of hardwood in the manufacturing process of paper PAP1, PAP2 used for release liner can be high. Hardwood pulp may comprise aspen and/or eucalyptus. Eucalyptus belongs to the genus *Eucalyptus,* of which an example species used in pulp processing is *Eucalyptus globulus.* Aspen belongs to the genus *Populus,* comprising species such as *Populus tremuloides* and *Populus tremula.*

The presence of softwood fraction, such as spruce, in the pulp has been observed to improve the characteristics of the pulp in the paper manufacturing process. The percentage of the softwood in the pulp may be varied.

A virgin pulp can comprise softwood equal to or less than 50 wt.-% of the virgin pulp. Advantageously, the backing material layer comprises virgin pulp comprising softwood less than 40 wt.-%, more preferably less than 30 wt.-%.

In addition, the backing material layer comprises virgin pulp comprising softwood at least 0 wt.-%, more preferably at least 1 wt.-%, or at least 2 wt.-%, more preferably at least 5 wt.-% or at least 10 wt.-%. Already an amount of few percentages, such as equal to or higher than 1%, preferably equal to or higher than 5%, of pulp comprising softwood has been observed to improve the paper manufacturing process. Therefore, virgin pulp(s) preferably comprises softwood for example in a range of 1 to 50 wt.-%, such in the range of 5 to 45 wt.-%, or in the range of 10 to 35 wt.-%.

The wood material may comprise hardwood. The amount of the hardwood is equal to or less than 100 wt.-% calculated from the all virgin wood material used, for example less than 80 wt.-% or less than 60 wt.-% and, for example, at least 5 wt.-%, or at least 15 wt.-% calculated from the all virgin wood material used.

The wood material may comprise eucalyptus, for example in a range of 0 to 90 wt.-%, such as in the range of 5 to 50 wt.-%, or in the range of 10 to 35 wt.-% calculated from the all virgin wood material used. Eucalyptus is preferably in the form of chemical pulp.

The wood material may comprise Aspen. Advantageously, the amount of the aspen is at least 0%, at least 5%, at least 10% or at least 15% calculated from the all virgin wood material used. In addition, advantageously the amount of the aspen is 40% at the most, or 35% at the most, or 30% at the most, or 25% at the most, calculated from the all virgin wood material used. The amount of the Aspen is preferably 0-40%, for example between 10 and 30%, or between 5 and 35% calculated from the all virgin wood material used. Aspen fibers have small average fiber length, and have a large specific surface (m²/g) that scatter light. Therefore, the increased amount of aspen may increase the brightness and opaqueness in a paper. When the amount of fibers having small average fiber length is increased in paper, the scattering of light typically increases. If aspen is used, it is preferably in the form of chemithermomechanical pulp.

Bleaching is typically used to improve the brightness and whiteness of the virgin pulp(s) and to remove any remaining compounds from the pulp, such as lignin, which may cause darkening of the pulp.

When manufacturing paper PAP1, PAP2 for a release liner, at least some of the virgin pulp is typically treated in a chemical process, such as Kraft process, to separate cellulose fibers from the other compounds and to obtain essentially wood free pulp comprising cellulose fibers. Therefore, the backing material layer PAP1 can comprise chemical pulp, such as Kraft pulp, preferably bleached chemical pulp.

Advantageously, all pulps used for the backing material layer are bleached.

The amount of bleached chemical pulp used for the paper PAP1, PAP2 suitable for a release liner may be varied. A virgin pulp mixture MIXV1 preferably comprises cellulose fibers of bleached chemical pulp at least 10 wt.-%, at least 25 wt.-%, at least 45 wt.-% or at least 70 wt.-% calculated from the all virgin fibers in the backing material layer PAP1. In addition, the virgin pulp mixture MIXV1 comprises cellulose fibers of bleached chemical pulp 100 wt.-% at the most, or 90 wt.-% at the most, or 80 wt.-% at the most calculated from the all virgin fibers in the backing material layer PAP1. The bleached chemical pulp may be used for example in a range of 10 to 100 wt.-%, in the range of 50 to 95 wt.-%, or in the range of 60 to 98 wt.-% calculated of the all virgin fibers used in the backing material layer PAP1. When the content of the bleached virgin chemical pulp in the pulp mixture MIXV1 is increased to an enough high level, it may provide dimensionally stable and dense paper surface able to reduce the surface penetration of the release coating, when it is applied on the paper surface.

The paper PAP2 may comprise bleached chemical pulp equal to or less than 97 wt.-% of the weight of said product. The backing material layer PAP1 preferably comprises bleached chemical pulp at least 10 wt.-%, at least 25 wt.-%, at least 45 wt.-% or at least 70 wt.-%. In addition, the backing material layer PAP1 preferably comprises bleached chemical pulp 95 wt.-% at the most, or 80 wt.-% at the most, or 60 wt.-% at the most. The bleached chemical pulp may be used for example in a range of 10 to 96 wt.-%, in the range of 50 to 95 wt.-%, or in the range of 60 to 92 wt.-% calculated from the total weight of the backing material layer PAP1.

Alternately or in addition, the paper PAP2 may comprise bleached chemithermomechanical pulp. The amount of bleached chemithermomechanical pulp in a pulp used for making paper PAP2, PAP1 suitable for a release liner may be varied.

A virgin pulp mixture MIXV1 may comprise cellulose fibers of bleached chemithermomechanical pulp equal to or less than 50 wt.-% of the virgin fibers. To increase the bulk of the backing material layer PAP1, a virgin pulp mixture MIXV1 may comprise cellulose fibers of bleached chemithermomechanical pulp at least 2 wt.-%, at least 5 wt.-% or at least 10 wt.-% and 50 wt.-% at the most, or 45 wt.-% at the most, or 40 wt.-% at the most calculated from all virgin fibers. The bleached chemithermomechanical pulp may be used for example in a range of 0-1 to 40-50 wt.-%, in the range of 5 to 45 wt.-%, or in the range of 10 to 35 wt.-% calculated from all virgin fibers. In addition to increasing the bulk, the amount of bleached chemithermomechanical pulp BCTMP in the pulp mixture may be used to change the production cost structure of the release liner REL1. When the content of bleached chemithermomechanical pulp in a pulp mixture is increased, the bulk of paper manufactured from the pulp mixture may be increased. Bleached chemithermomechanical pulp has high light scattering properties in paper. However, it may increase stiffness and opacity, which in release liners is undesired.

Advantageously, the backing material layer PAP1 may comprise bleached chemithermomechanical pulp equal to or less than 45 wt.-% of the weight of the backing material layer PAP1. The backing material layer PAP1 may comprise bleached chemithermomechanical pulp at least 0 wt.-%, at least 5 wt.-% or at least 10 wt.-% and 50 wt.-% at the most, or 45 wt.-% at the most, or 40 wt.-% at the most calculated from the total weight of the manufactured backing material layer PAP1. The bleached chemithermomechanical pulp may be used for example in a range of 0-1 to 40-50 wt.-%, in the range of 5 to 45 wt.-%, or in the range of 10 to 35 wt.-% calculated from the total weight of the backing material layer PAP1. Bleached chemithermomechanical pulp may be configured to increase the amount of cellulose fibers in a specific volume of the paper, without increasing the grammage of the paper. Therefore, the backing material layer PAP1 comprising bleached chemithermomechanical pulp may have the same thickness as a backing material layer PAP1 comprising only bleached chemical pulp, but wherein the grammage has been reduced compared to the paper comprising only bleached chemical pulp, while preserving the density of the paper sufficient for a release coating.

Bleached chemithermomechanical pulp may be used to replace at least some of bleached chemical pulp, such as bleached Kraft pulp, in the paper PAP2.

The paper PAP2 for the backing material layer PAP1 may comprise total amount of
- the bleached chemical pulp, and
- the bleached chemithermomechanical pulp
equal to or less than 99 wt.-% of the weight of the paper PAP2.

The sum of bleached chemical pulp, and bleached chemithermomechanical pulp in the paper PAP2 for the backing material layer PAP1 is preferably at least 75 wt.-%, at least 80 wt.-%, at least 85 wt.-% or at least 90 wt.-% and preferably 95 wt.-% at the most, or 97 wt.-% at the most, or 95 wt.-% at the most calculated from the total weight of the paper PAP2 for the backing material layer PAP1. The bleached chemical pulp and the bleached chemithermomechanical pulp may be used for example in a range of 10 to 99 wt.-%, in the range of 50 to 90 wt.-%, or in the range of 60 to 95 wt.-% calculated from the total weight of the backing material layer PAP1.

Advantageously the virgin pulp comprises hardwood and softwood. The pulp comprising a mixture of hardwood and softwood may be used to reduce the brittleness of paper formed from the paper web during manufacturing process. The composition of the pulp may be used to improve paper quality, such as the tearing strength of the paper manufactured on the machine.

For example, the use of pulp comprising both hardwood and softwood may enable production of paper suitable for release liner layer, where the ratio of the bulk to the grammage in the paper has been increased. In an example, birch is used together with spruce.

In accordance with an embodiment, a pulp used for making the backing material layer PAP1 suitable for a release liner does not contain any mechanical pulp due to high quality requirements of the release liner REL1. When mechanical pulp is added to a pulp mixture, the bulk of paper manufactured from the pulp mixture may be increased. A virgin pulp mixture preferably comprises cellulose fibers of mechanical pulp 5 wt.-% at the most, or 2 wt.-% at the most, or 0.5 wt.-% at the most, most preferably exactly 0 wt.-% calculated from all virgin fibers. The mechanical pulp may be used for example in a range of 0 to 1 wt.-% calculated from all virgin fibers.

Therefore, the backing material layer PAP1 may comprise mechanical pulp equal to or less than 5 wt.-%, most preferably exactly 0 wt.-%, of the weight of the backing material layer PAP1. The manufactured backing material layer PAP1 may comprise bleached mechanical pulp less than 4 wt.-% or less than 1 wt.-%, or less than 0.5 wt.-% at the most, and most preferably exactly 0 wt.-% calculated from the total weight of the backing material layer PAP1. The bleached mechanical pulp may be used for example in a range of 0 to 1 wt.-% calculated from the total weight of the backing material layer PAP1.

The backing material layer PAP1 of the release liner REL1 may also comprise other components, such as fillers. For example, at least one kind of mineral filler may be used in the backing material layer PAP1. In addition, the backing material layer may comprise a mineral coating layer. Therefore, the recovered and pulped release liner may also comprise mineral fillers and coatings.

Mineral fillers comprise, for example, clay, calcined clay, kaolin, natural ground calcium carbonate, precipitated calcium carbonate, talc, calcium sulphate, and/or titanium dioxide.

The amount of the mineral filler(s) added to the pulp mixture MIX1 (excluding the amounts coming from the recovered and pulped release liner) is preferably from 0 to 10 weight-% based on the total dry weight of said pulp mixture MIX1. Thus, the amount of the mineral filler added to the pulp mixture MIX1 (excluding the amounts coming from the recovered and pulped release liner) is preferably less than 10 weight-% or less than 7 weight-% and most preferably less than 5 weight-% or less than 3 weight-%, for example between 0 and 2 weight-% or between 0 and 1 weight-%, or exactly 0 wt.-% based on the total dry weight of the pulp mixture MIX1. Advantageously, the backing material layer PAP1 does not substantially comprise mineral fillers due to strength issues.

Further, the total amount of the mineral filler(s) in the backing material layer PAP1 including mineral filler(s) coming from the recovered and pulped release liner is preferably from 0 to 12 weight-% based on the total weight of the backing material layer PAP1. The total amount of the mineral filler in the backing material layer PAP1 may be at least 0.5 wt.-%, or at least 1 wt.-% based on the total weight of the backing material layer PAP1. The total amount of the mineral filler in the backing material layer PAP1 is preferably less than 12 weight-%, less than 10 weight-% or less than 7 weight-%, more preferably less than 5 weight-%, and most preferably less than 3 weight-%, for example between 0 and 7 weight-%, or between 0 and 5 wt.-%, or between 0 and 3 wt.-%, or between 1 and 5 wt.-%, based on the total weight of the backing material layer PAP1. In addition to the decreased strength properties, mineral fillers may also decrease transparency level of the product.

The surface penetration of the release coating can be reduced by applying a coating on the paper PAP2 surface. Therefore, the backing material layer PAP1 preferably comprises a coating PAPCT2 comprising at least one coating layer (a primer layer), for example a surface size layer or another coating layer, applied on at least one side of the paper PAP2.

A mixture for coating the paper PAP2 used in the backing material layer PAP1 preferably comprises water-soluble binders capable of forming a film. Advantageously, starch and/or polyvinyl alcohol (PVA) and/or carboxymethyl cellulose (CMC) is used for the coating layer PAPCT2 of the backing material layer PAP1.

The backing material layer PAP1 may comprise at least one coating layer (a primer layer), for example a surface size layer, on one or two sides of the paper PAP2. Advantageously there is 0 to 3, or 0 to 2 coating layers on one or two sides of the paper PAP2, more preferably 1 or 2 coating layers on one or two sides of the paper PAP2, and most preferably 1 or 2 coating layers on one side of the paper PAP2. Therefore, the backing material layer PAP1 may contain one or more coating layers PAPCT2 on the paper PAP2. In the case of several coating layers, the coating layers may differ from each other. The coating layer may be configured to reduce the porosity of the support layer surface, thereby improving the smoothness of the backing material layer PAP1.

The coating layer PAPCT2 of the backing material layer PAP1 may be a polymer containing layer. If the coating layer PAPCT2 on the paper PAP2 is a polymer containing layer, it is preferably applied as a coating composition on the paper PAP2, when manufacturing the backing material layer PAP1. A technical effect of a polymer containing coating layer is to reduce the surface penetration of a subsequent release coating, when it is applied on the cellulose fibre-based support layer.

Polyvinyl alcohol and/or starch and/or carboxymethyl cellulose are polymers having a film-forming nature which can provide a barrier between the release coating layer RELCT1 and the paper. Therefore, the backing material layer PAP1 may comprise a coating layer PAPCT2 on the paper PAP2 which preferably contains a polymer, preferably polyvinyl alcohol and/or starch and/or carboxymethyl cellulose, the polymer thereby preferably having capability to provide barrier properties for the cellulose fibre-based support layer. In an example, the coating PAPCT2 on a paper PAP2 comprises at least polyvinyl alcohol. In an example, the coating PAPCT2 comprises at least starch. In an example, the coating PAPCT2 comprises at least carboxymethyl cellulose.

The backing material layer PAP1 may be arranged to have a coating layer applied on the paper PAP2. The coating of the backing material layer PAP1 on the paper PAP2 may be a water-based emulsion or water-based dispersion containing a polymerized diene comprising vinyl functional groups, which is applied as a coating on to the paper PAP2, thereby forming a backing material layer PAP1. Preferably, the coating of the backing material layer is arranged to have hydrophobicity. Hydrophobic surface may improve the orientation of vinyl functional groups towards the surface of the coating layer, thereby promoting the formation of covalent bonds with a silicone-based release layer, when a release coating layer RELCT1 is applied on top of the hydrophobic coating of the backing material layer PAP1.

As disclosed above, in case of a polymer coating layer on the paper PAP2, advantageously the mixture used to form said polymer coating layer for the backing material layer may comprise water soluble binders such as starch and/or polyvinyl alcohol and/or carboxymethyl cellulose.

The coating layer(s) PAP2 of the backing material layer PAP1 may comprise latex. The latex is very sticky, and the adhesive properties or stickiness provide the binding strength that is desired in the coating. Further, latex looks like a white substance due to the particles' ability to scatter light when dispersed in water. Further, the latex typically builds bridges between the pigment particles in the paper coating.

The coating layer(s) of the backing material layer PAP1 may comprise clay, i.e., the paper PAP2 may be a clay coated paper.

Preferably, the coating of the backing material layer PAP1 is on the paper PAP2 in the range of 0 to 10 g/m² per side. Typically, the amount of the coating of the backing material layer PAP1 on the paper PAP2 is in the range of 0 to 5 g/m² or 1 to 5 g/m² per side. Advantageously, the amount of the coating on the paper PAP2 is at least 1 g/m² per side, or at least 2 g/m² per side, or at least 3 g/m² per side. Further, the amount of the coating on the paper PAP2 is preferably 10 g/m² per side at the most, or 7 g/m² per side at the most, or 5 g/m² per side at the most.

Most advantageously, coating in the range of 1.5 to 10 g/m² per side of the paper, preferably in the range of 2 to 7 g/m² per side, is used. Preferably, said coating is at least on that side of the paper PAP2 that is or will be in contact with the release coating layer RELCT1.

In an example, the total amount of the coating(s) on the paper PAP2 is from 0 to 25 weight-% based on the total weight of the backing material layer PAP1. The total amount of the coating(s) is preferably less than 20 weight-%, more preferably less than 15 weight-% and most preferably less than 10 weight-% or less than 10 weight-% based on the total weight of the backing material layer PAP1. The total amount of the coating(s) may be at least 0 weight-% or at least 2 weight-% based on the total weight of the backing material layer PAP1.

The surface penetration of the release coating layer RELCT1 can further be reduced by calendering the backing material layer PAP1. Therefore, the backing material layer PAP1 is preferably calendered, more preferably supercalendered. Calendering improves the surface smoothness but reduces the specific volume and the paper thickness. Reduction in the paper thickness may, in some cases, lead to problems in the label manufacturing process, as the stencils used to die cut the label stock may have been designed to operate at a predefined paper thickness.

The surface of the backing material layer PAP1 may be calendered into a desired thickness, such that the ratio of grammage to thickness of the paper in micrometres is maintained at a level equal to or higher than 1.0. This may enable manufacturing of low grammage paper, which has a high surface density suitable for a release coating. Due to high surface density, also the amount of other raw materials beside fibers, such as coating material and additives used in the release liner manufacturing process, may be reduced

It may be good for manufacturing and transportation costs to reduce the grammage of the paper to reduce the weight of a release liner. This, however, may often result in adverse effects, since typically paper having less grammage is also thinner and may have poor strength properties. Therefore, it may not be suitable for the intended purpose, such as use as a backing material in an automated high-speed labelling process. When the grammage is reduced, the specific volume and tearing resistance of a conventional paper are typically also reduced. The smoothness of the paper surface may thus decrease, which may have a negative effect on the subsequent release coating.

Therefore, grammage of the backing material layer PAP1 is preferably at least 38 g/m², at least 45 g/m² or at least 50 g/m², and preferably 160 g/m² at the most, 140 g/m² at the most or 120 g/m² at the most. Grammage may be, for example, in the range of 38 to 160 g/m² or between 40 and 150 g/m².

In papers used for release liners, a high transparency level of the paper is desirable. The backing material layer PAP1 preferably has a transparency level of equal to or higher than 28%, preferably equal to or higher than 33%, such as in the range of 28% to 85%, when grammage of the backing material layer PAP1 is equal to or higher than 70 grams per square meter. A backing material layer PAP1 preferably has a transparency level of equal to or higher than 40%, preferably equal to or higher than 45%, and most preferably equal to or higher than 60%, such as in the range of 40% to 85%, when grammage is less than 70 grams per square meter.

The backing material layer PAP1 can have smoothness (measured according to ISO 5627) of at least 900 sec/min or at least 1500 sec/min, more preferably at least 2000 sec/min or at least 3000 sec/min and most preferably at least 4000 sec/min or at least 4500 sec/min.

The backing material layer can have density of at least 1.0, such as in the range of 1.0 to 1.2, wherein the density refers to grammage (measured according to ISO 536) per thickness (measured according to ISO 534).

The backing material layer PAP1 can have porosity equal to or less than 15000 pm/Pas (measured according to ISO 11004).

In release liners REL1, the backing material layer PAP1 may have a thickness in the range of 35 to 100 micrometres. Thickness of the backing material layer PAP1 is preferably at least 35 microns, more preferably at least 40 or at least 45 microns. In addition, the thickness of the backing material may not be greater than 100 microns, more preferably not greater than 80 microns or 60 microns. Advantageously, the thickness of the backing material is between 40 and 68 microns, more preferably between 42 and 60 microns.

A sufficient density may be equal to or less than 1200 kg/m³, such as in the range of 1000 to 1200 kg/m³ or in the range of 1050 to 1150 kg/m³.

The shade of paper is typically measured on the CIELAB model. CIE *L*a*b** (CIELAB) is a color space specified by the International Commission on Illumination (French *Commission internationale de I'eclairage,* hence its *CIE* initialism). It describes the colors visible to the human eye and was created to serve as a device-independent model to be used as a reference. L* is for lightness of the paper. The red/green opponent colors are represented along the a* axis, with green at negative a* values and red at positive a* values. The yellow/blue opponent colors are represented along the b* axis, with blue at negative b* values and yellow at positive b* values.

Lightness L* (C/2°) of the backing material layer PAP1 can be at least 90, more preferably at least 92 or at least 93, and most preferably at least 94 or at least 95.

The color channel a* (C/2°) of the backing material layer PAP1 can be between -7 and +3, more preferably between -5 and +3 or between -7 and +1, and most preferably between -5 and +1.

The color channel b*(C/2°) of the backing material layer PAP1 can be between 2 and 12, more preferably between 4 and 12 or between 2 and 10, and most preferably between 4 and 10.

For example, stated Lightness L* (C/2°) as well as above mentioned color channel values that can be obtained according to the novel solution, may increase the market area wherein the manufactured product can be sold. ISO 2470 brightness of the backing material layer PAP1 is preferably about 78, for example between 72 and 85.

The release liner REL1 should withstand the functional requirements set by the end purpose, such as a labelling system. In particular, the mechanical properties of the release liner, such as surface smoothness, surface density and tearing resistance, should be suitable for the release liner to function properly.

A release liner REL1 is obtained from the backing material layer PAP1 by applying a release coating layer RELCT1 on said backing material layer PAP1. Therefore, the backing material layer PAP1 is preferably coated with a release agent in order to form a release coating layer RELCT1. The release coating layer RELCT1 is used in order to achieve a release effect for the release liner REL1 against the adhesive layer ADH1.

A typical example of a release coating contains silicone polymer. The release coating layer may comprise a silicone polymer based compound, applied on at least one side of the substrate layer. Release coatings based on silicone compounds are typically easily applicable and flow readily. Therefore, the release liner REL1 preferably comprises a silicone release coating layer on the backing material layer. The chemistry of the silicone defines the force required to release the adhesive (and therefore the face layer) from the backing material layer PAP1.

The release coating layer RELCT1 on the backing material layer can comprise cross-linkable silicone. The silicone used in the release coating layer RELCT1 may be, for example, UV curable. The UV curable silicone may be most preferably used because it may allow the use of lower temperatures for the curing process of the silicone.

Low temperature curable silicone compound (LTC silicone compound), refers to an addition-curable compound comprising silicone polymer with silane hydride groups and a cross-linker component with functional vinyl groups, which components are configured to cross-link in a catalytic hydrosilylation reaction at a low temperature. In the presence of precious metal catalysts such as platinum or rhodium complexes, a silane hydride group undergoes an addition reaction with a vinyl group. The addition reaction is typically catalysed by a platinum catalyst. Platinum-catalyzed addition reactions are fast, and the curing speed of the reaction can be controlled via the curing temperature. A low temperature in this context refers to a catalytic hydrosilylation reaction temperature of less than 120°C, preferably in the range of 55 to 110°C, wherein the silane hydride groups and the functional vinyl groups form covalently cross-linked structures within the release coating, thereby forming the cured release layer.

The release coating layer RELCT1 may consist of silicone. The amount of silicone in the release coating layer RELCT1 can be at least 90 wt.-%. The amount of silicone on the release coating layer is preferably equal to or less than 2 g/m² per side. Advantageously the amount of the silicone is at least 0.3 g/m², or at least 0.4 g/m², more preferably at least 0.5 g/m² or at least 0.6 g/m² (dry grammage) to provide a functional release coating on the backing material layer PAP1. Advantageously the amount of the silicone is 2.0 g/m² at the most, or 1.6 g/m² at the most, more preferably 1.4 g/m² at the most or 1.2 g/m² at the most (dry grammage) in order to provide cost effective solution. The amount of the silicone on the release coating layer may be, for example, between 0.3 and 1.5 g/m², or between 0.6 and 1.2 g/m² (dry grammage).

The silicone coating used is preferably recyclable. The release agent used in the release liner REL1 may be, but is not limited to, a one-part or two-part silicone system, preferably a 3 to 5-part silicone system.

The release coating layer RELCT1 is formed of a release coating applied on the backing material layer PAP1. The release coating can be applied as an uncured composition, which is a liquid polymer solution that is subsequently cured to form the release coating layer RELCT1. Advantageously, the cured release coating layer RELCT1 has a non-blocking surface.

The release coating layer RELCT1 can have a low surface energy. The surface energy level of a release coating layer RELCT1 is preferably in the range of 21 to 25 dynes/cm. The release coating layer may be used to protect adhesive material that is in contact with the coated release surface. Adhesive material of a label laminate web from premature adhesive bonding may be protected by a non-blocking surface of the cured release coating layer.

The release coating may be applied on the substrate layer directly by the paper manufacturer or later by a label manufacturer, when manufacturing the face layer, i.e. "the face stock".

In the method for manufacturing the paper PAP2 used in the backing material layer PAP1, a pulp mixture MIX1 comprising cellulose fibers may be formed by mixing together different pulps and, typically, some other compounds. The mixing may be performed, for example, by homogenising the pulp mixture MIX1 in a mixer. The pulp mixture preferably comprises the bleached recycled release liner pulp BRELP1. The pulp mixture MIX1 may comprise virgin bleached pulp(s), such as virgin bleached chemical pulp PULPV1. The pulp mixture may further comprise, for example, another bleached pulp PULP2, for example bleached virgin chemithermomechanical pulp BCTMP.

The bleached chemical pulp PULPV1 may comprise hardwood pulp and/or another fiber source(s) as disclosed in this application. The presence of cellulose fibers from chemically treated hardwood in the pulp mixture MIX1 is advantageous for the brightness and transparency of the product. The bleached virgin chemical pulp PULPV1 can comprise both, hardwood pulp and softwood pulp. The chemically treated softwood in the pulp mixture MIX1 in general has a longer average fiber length than chemically treated hardwood, and is advantageous for the strength properties of the formed paper web WEB1.

Preferably, all pulps used for the backing material layer PAP1 are bleached.

The bleached recycled release liner pulp BRELP1 and/or chemical pulp PULPV1 and/or other kind of bleached pulp PULP2 may be refined, for example, separately at a refining section of a paper machine prior to forming the pulp mixture MIX1. Pulps may, alternatively or in addition, be refined together when forming the pulp mixture MIX1 by mixing.

At the refining section, pulp which comprises water is subjected to shear and stress forces. As a result of the refining, cutting and fibrillation of the cellulose fibers is obtained. Refining may be performed by means of mechanical action, for example by using bars, drums, beaters and/or refiners. Refining, and in particular refining to a high degree, may sometimes be referred to as beating.

The bleached recycled release liner pulp may not need said refining step at all, because the fibers have already been refined when the original release liner RELR has been produced. However, the recovered release liner is preferably at least pulped by using, for example, a pulper.

Before mixing in the mixing step, the virgin pulp(s) PULPV1, PULP2, MIXV1 preferably have a Schopper-Riegler value equal to or less than 70, preferably equal to or less than 50, such as in the range of 25 to 55, preferably in the range of 30 to 50. The virgin pulp(s) PULPV1, PULP2 preferably have a Canadian Standard Freeness value of equal to or more than 90 ml, preferably equal to or more than 180 ml, such as in the range of 180 to 500 ml, preferably in the range of 215 to 425 ml. The virgin pulp(s) PULPV1, PULP2, MIXV1 preferably have a Canadian Standard Freeness value, for example, equal to or higher than 130 ml, preferably equal to or higher than 140 ml, such as equal to or higher than 300, preferably equal to or higher than 325 ml.

Before mixing in the mixing step, the bleached recycled release liner pulp BRELP1 preferably has a Schopper-Riegler value equal to or less than 70, preferably equal to or less than 50, such as in the range of 25 to 55, preferably in the range of 30 to 50. The bleached recycled release liner pulp BRELP1 preferably has a Canadian Standard Freeness value of equal to or more than 90 ml, preferably equal to or more than 180 ml, such as in the range of 180 to 500 ml, preferably in the range of 215 to 425 ml. The bleached recycled release liner pulp BRELP1 may have a Canadian Standard Freeness value, for example, equal to or higher than 130 ml, preferably equal to or higher than 140 ml, most preferably equal to or higher than 300, preferably equal to or higher than 325 ml.

The pulp mixture MIX1 comprising virgin pulp(s) PULPV1, PULP2, MIXV1 and the recycled release liner pulp preferably has a Schopper-Riegler value equal to or less than 70, preferably equal to or less than 50, such as in the range of 25 to 55, preferably in the range of 30 to 50. The pulp mixture MIX1 preferably has a Canadian Standard Freeness value of equal to or more than 90 ml, preferably equal to or more than 180 ml, such as in the range of 180 to 500 ml, preferably in the range of 215 to 425 ml. The pulp mixture MIX1 preferably has a Canadian Standard Freeness value, for example, equal to or higher than 130 ml, preferably equal to or higher than 140 ml, such as equal to or higher than 300, preferably equal to or higher than 325 ml. Therefore, it is possible to form a backing material layer from the pulp mixture, which backing material layer is suitable for the release liner.

The basic qualities of the backing material layer PAP1 are already determined to a large extent when forming the paper web WEB1 from the pulp mixture MIX1. Filler chemicals, such as viscosity modifiers and/or pigments and/or binder material, may be introduced directly to the pulp mixture MIX1 before the paper web WEB1 is formed.

As disclosed in this application, preferably mineral fillers are not added as such into the pulp mixture MIX1, at least not in high amounts. However, some amounts of recycled minerals may end up into the pulp mixture MIX1, for example, due to the recycled release liner pulp used.

At a forming section of the paper machine, paper web WEB1 is formed from the pulp mixture MIX1. When manufacturing the paper PAP2 suitable for the release liner REL1, the pulp mixture MIX1 is typically introduced in a concentration between 0.25 and 3 wt.-%, such as in the range of 0.3 and 2 wt.-%, preferably less than 1 wt.-%, such as in the range of 0.3 to 0.8 wt.-%. The weight percentage (wt.-%) refers to the dry content of the mixture. The dry content of the mixture is defined as the concentration of solids by weight in a mixture. The dry content of a paper web is defined as the concentration of solids by weight in a paper web. The dry content of a paper web formed from the pulp mixture MIX1, comprises both fibers and any chemicals such as pigments or binder material introduced into the pulp mixture MIX1.

On the forming section of the paper machine, the paper web WEB1 is formed from the pulp mixture MIX1 and dewatered. During the dewatering process, the formed paper web is typically forced against the forming wire. The solid particles in the suspension are to a certain degree trapped initially by the wire and later by the accumulating wet web. A part of the solid particles, referred to as fine particles, may flow through the wire, and are recycled back to the pulp suspension, i.e. to the pulp mixture MIX1. These recycled fine particles have an impact on the manufacturing process, in particular when forming a paper web. This recycling circulation is referred to as the short circulation of the pulp suspension. The amount of recycled fine particles defines a retention level, which describes the ability of the formed paper web to retain fine particles on the web, and therefore the balance between drainage and formation of the paper web.

Fine particles in this context refer to particles having a maximum dimension equal to or less than 0.2 millimetres, when determined by an optical analyser. The content of fine particles in bleached pulp varies depending of the used wood species and extent of refining. For example, the content of fine particles in a bleached chemical pulp may typically be in the range of 14 wt.-% or less. The content of fine particles in a mechanical and chemithermomechanical pulp is typically higher than in bleached chemical pulp, such as equal to or higher than 20 wt.-%.

When the retention level of the initially forming paper web is high, the drainage of water from the paper web may be too slow, and the moisture content of the paper web remains too high. On the other hand, a low retention level is an indication of a high number of fine particles flowing through the formed paper web and through the wire into the short circulation, which may lead to accumulation of the particles in the pulp suspension.

After said dewatering, the paper web WEB1 is moved on a press section to reduce the moisture content of the paper web further. The press section of a paper machine typically comprises a number of rolls for guiding and/or pressing the paper web. The paper web WEB1 is then moved from the press section to a drying section of a paper machine. In the drying section, the paper web is heated to evaporate most of the remaining moisture in the paper web. After drying section, the paper web WEB1 may have a dry content level equal to or more than 90 wt.-%, for example in the range of 90 to 95 wt.-%. Preferably, the method therefore comprises a step for reducing moisture content of the paper web WEB1 in a press section, and a step for drying the paper web WEB1 in a drying section, thereby forming paper PAP2 for a backing material layer PAP1.

The finishing of the backing material layer PAP1 can be implemented by coating (for example surface sizing) the formed paper PAP2 and/or by a calendering treatment.

The coating and the calendering improve the smoothness of the paper surface. Calendering treatment may be used to reduce the thickness of the paper. Therefore, calendering treatment may be used in reducing the specific volume of the backing material layer PAP1. Preferably, the backing material layer PAP1 is super calendered. A coating of the backing material layer PAP1 may be applied on one side or on both sides of the paper PAP2. The coating of the backing material layer PAP1 preferably comprises size coating and/or pigments and/or filler chemicals, such as described in this application.

The calendering treatment may be done to the backing material layer PAP1 before or after applying the coating layer on the paper PAP2, or to the backing material layer PAP1 when the paper PAP2 is not to be coated at all. The calendaring treatment may comprise use of a calender and/or multi-nip calender and/or super calender to modify the surface properties of the paper PAP2 and/or the backing material layer PAP1 and to reach the final thickness for the paper PAP2 and/or for the backing material layer PAP1. The backing material layer PAP1 may be calendered into a final thickness equal to or less than 1200 kg/m³.

### Example

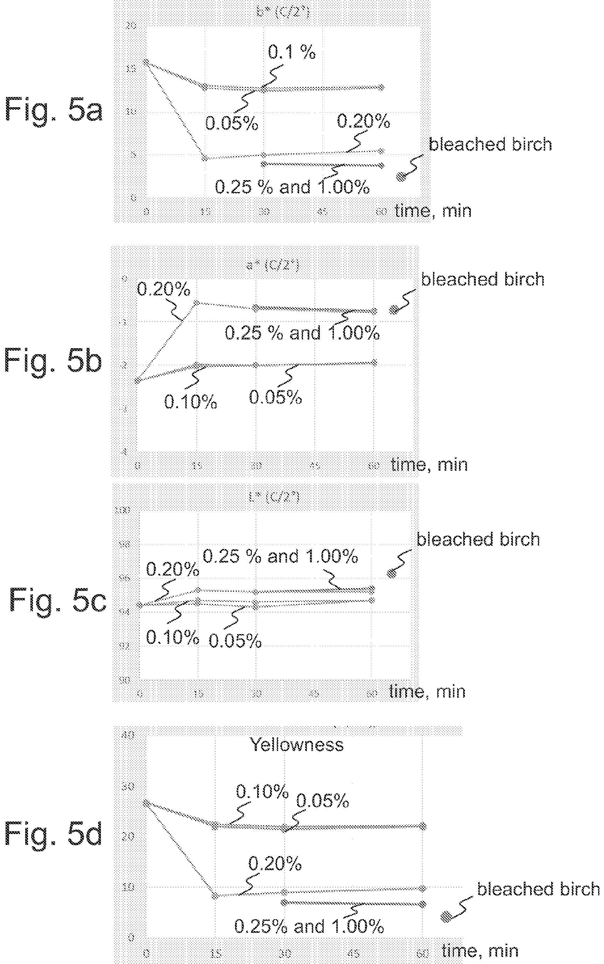

The effect of bleaching on the de-siliconized recycled release liner pulp was tested. Figures 5a-6c are trend diagrams representing by way of examples the development of some properties of manufactured pulp as a function of time.

The following test points were used:

| Test point | Amount of sodium dithionite (%) | Delay time (min) | consistency (%) | Temperature (°C) |
|---|---|---|---|---|
| 1 | 0,05 | 15 | 4 | 50 |
| 2 | 0,05 | 30 | 4 | 50 |
| 3 | 0,05 | 60 | 4 | 50 |
| 4 | 0,10 | 15 | 4 | 50 |
| 5 | 0,10 | 30 | 4 | 50 |
| 6 | 0,10 | 60 | 4 | 50 |
| 7 | 0,02 | 15 | 4 | 50 |
| 8 | 0,02 | 30 | 4 | 50 |
| 9 | 0,02 | 60 | 4 | 50 |
| 10 | 0,25 | 30 | 4 | 50 |
| 11 | 0,25 | 60 | 4 | 50 |
| 12 | 1,00 | 30 | 4 | 50 |
| 13 | 1,00 | 60 | 4 | 50 |

The analysing comprised the following measurements:
- b*(C/2°) (measured according to ISO 5631),
- a*(C/2°) (measured according to ISO 5631),
- L*(C/2°) (measured according to ISO 5631),
- Yellowness %,
- ISO Brightness % (measured according to ISO 2470),
- CIE Whiteness 420 (C/2°) %, (measured according to ISO 11476), and
- Y (C/2°) %.

The results are shown in Figures 5a-6c.

Figure 5a shows b* (C/2°) values of the de-siliconized bleached recycled release liner pulp as well as bleached birch Kraft pulp.

Figure 5b shows a*(C/2°) values of the de-siliconized bleached recycled release liner pulp as well as bleached birch Kraft pulp.

Figure 5c shows L* (C/2°) values of the de-siliconized bleached recycled release liner pulp as well as bleached birch Kraft pulp.

Figure 5d shows Yellowness (C/2°) % of the de-siliconized bleached recycled release liner pulp as well as bleached birch Kraft pulp.

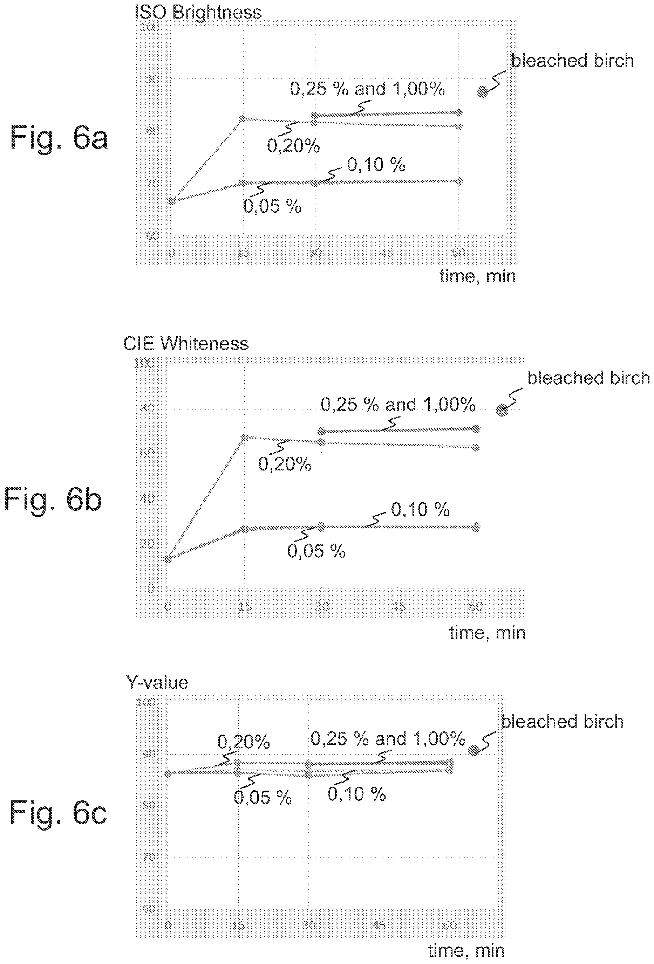

Figs 6a-c shows some lightness values measured from the test points. Figure 6a shows ISO Brightness, % values of the de-siliconized bleached recycled release liner pulp as well as bleached virgin birch Kraft pulp.

Figure 6b shows CIE Whiteness 420 (C/2°), % values of the de-siliconized bleached recycled release liner pulp as well as bleached birch Kraft pulp.

Figure 6c shows Y values (C/2°), % of the de-siliconized bleached recycled release liner pulp as well as bleached birch Kraft pulp.

As can be seen, the best results were provided when a dosage of sodium dithionite between 0.2-1.0 % was used for to the de-siliconized recycled release liner pulp. Furthermore, a small dosage of sodium dithionite between 0.2 and 0.25 % was enough to provide good optical values for the product made of the de-siliconized recycled release liner pulp.

In addition, delay time of 15 minutes was enough for all test points, and the best delay time was not more than 30 minutes.

As can be seen, it is possible to use de-siliconized bleached recycled release liner pulp as raw material in a release liner if treated according to the novel solution, even when desired colour for the release liner REL1 manufactured from said pulp is white.

## Claims

1. A backing material layer (PAP1) for a release liner (REL1),
wherein the backing material layer (PAP1) comprises:
- bleached chemical pulp (PULPV1), and
- bleached recycled release liner pulp (BRELP1)
wherein color (C/2°) of the backing material layer, determined according to standard ISO 5631, valid in 2017, is as follows:
- lightness L* of the backing material layer (PAP1) is at least 90,
- color channel b* of the backing material layer (PAP1) is between 2 and 12,
- color channel a* of the backing material layer (PAP1) is between -7 and +3, and
- amount of the bleached recycled release liner pulp (BRELP1) is at least 1 wt.-% based on the total weight of said backing material layer (PAP1), and
- the backing material layer (PAP1) has a grammage equal to or higher than 30 grams per square meter.

2. The backing material layer according to claim 1, wherein
- the backing material layer (PAP1) has silicone content less than 2.0 wt.-% and/or
- the bleached recycled release liner pulp has silicone content between 0 and 1.0 wt.-%.

3. The backing material layer according to any of the preceding claims, wherein
- the color channel a* of the backing material layer (PAP1) is between -5 and +1, and/or
- the color channel b* of the backing material layer (PAP1) is between 4 and 10.

4. The backing material layer according to any of the preceding claims, wherein the amount of the bleached recycled pulp is at least 5 wt.-% based on the total weight of said backing material layer (PAP1).

5. The backing material layer according to any of the preceding claims, wherein the lightness L* of the backing material layer (PAP1) is at least 92.

6. The backing material layer according to any of the preceding claims, wherein
- the backing material layer (PAP1) comprises a coating on the paper (PAP2), and/or
- the amount of the bleached recycled release liner pulp is between 7 wt.-% and 25 wt.-% calculated from the total weight of the backing material layer, and/or
- amount of mechanical pulp is less than 5 wt.-% calculated from the total weight of the backing material layer (PAP1) and/or
total amount of mineral fillers in the backing material layer is less than 12 wt.-% based on the total weight of the backing material layer (PAP1).

7. A release liner comprising
- the backing material layer (PAP1) according to any of the preceding claims 1 to 6, and
- a release coating layer (RELCT1) on said backing material layer.

8. A label laminate comprising
- the release liner (REL1) according to the claim 7, and
- a face layer (FACE1),
wherein an adhesive layer (ADH1) is provided between the release liner (REL1) and the face layer (FACE1).

9. A method for manufacturing a backing material layer (PAP1) suitable for use as a layer of a release liner (REL1),
the method comprising:
- bleaching a recycled release liner pulp (RELP1) by using at least one of the following chemicals:
- hydrogen peroxide H₂O₂,
- sodium dithionite Na₂S₂O₄,
- sodium bisulfite NaHSO₃, and
- sodium borohydride solution
in order to form a bleached recycled release liner pulp (BRELP1) before forming a pulp mixture (MIX1),
- forming the pulp mixture (MIX1) comprising cellulose fibers by mixing at least bleached chemical pulp (PULPV1) and the bleached recycled release liner pulp (BRELP1),
- forming a paper web from the pulp mixture (MIX1),
- reducing moisture content of the paper web hereby forming paper (PAP2) for the backing material layer (PAP1), and
- treating the paper (PAP2) in order to form the backing material layer (PAP1)
wherein
- the formed backing material layer (PAP1) has a grammage equal to or higher than 30 grams per square meter,
wherein color (C/2°) of the backing material layer, determined according to standard ISO 5631, valid in 2017, is as follows:
- lightness L* of said backing material layer (PAP1) is at least 90,
- color channel b* of said backing material layer (PAP1) is between 2 and 12, and
- color channel a* of said backing material layer (PAP1) is between -7 and +3,
and
- amount of the bleached recycled release liner pulp (BRELP1) is at least 1 wt.-% based on the total weight of said backing material layer (PAP1).

10. The method according to claim 9, wherein the recycled release liner pulp is bleached by using sodium dithionite Na₂S₂O₄ and the amount of the sodium dithionite is between 0.15 and 0.50 wt.-% calculated from dry weight of the recycled release liner pulp.

11. The method according to any of the preceding claims 9 to 10, wherein
- the bleached recycled release liner pulp has silicone content between 0 and 1.0 wt.-%, and/or
- the color channel a* of the backing material layer (PAP1) is between -5 and +1, and the color channel b* of the backing material layer (PAP1) is between 4 and 10.

12. The method according to any of the preceding claims 9 to 11, wherein the treatment for the paper (PAP2) comprises
- coating the paper (PAP2).

13. The method according to any of the preceding claims 9 to 12, wherein
- the amount of the dosed bleached recycled release liner pulp is between 7 wt.-% and 25 wt.-% calculated from the total weight of the backing material layer (PAP1) and/or
- amount of mechanical pulp is less than 5 wt.-% calculated from the total weight of the backing material layer (PAP1) and total amount of mineral fillers in the backing material layer is less than 12 wt.-% based on the total weight of the backing material layer (PAP1).

14. Use of a backing material layer (PAP1) according to any of the claims 1 to 6 in combination with a release coating.

15. A method for manufacturing bleached recycled release liner pulp suitable for use as a raw material in a layer of a release liner, the method comprising:
- pulping recovered release liner material in water-based solution in order to release at least some silicone particles to said water-based solution,
- removing at least some of said silicone particles from the water-based solution by using a flotation step,
- removing at least some impurities from the pulped release liner material in a screening step and/or a cleaning step, and
- removing at least some water from said pulped release liner material in order to form recycled release liner pulp (RELP1), and
- bleaching the recycled release liner pulp in order to form bleached recycled release liner pulp (BRELP1) by using at least one of the following chemicals:
- hydrogen peroxide H₂O₂,
- sodium dithionite Na₂S₂O₄,
- sodium bisulfite NaHSO₃, and
- sodium borohydride solution.

## Patentansprüche

1. Trägermaterialschicht (PAP1) für eine Trennschicht (REL1),
wobei die Trägermaterialschicht (PAP1) Folgendes umfasst:
- gebleichten chemischen Holzstoff (PULPV1), und
- gebleichten recycelten Trennschicht-Holzstoff (BRELP1)
wobei die Farbe (C/2°) der Trägermaterialschicht, gemäß der 2017 gültigen ISO 5631 Norm bestimmt, wie folgt ist:
- die Leichtigkeit L* der Trägermaterialschicht (PAP1) beträgt mindestens 90,
- der Farbkanal b* der Trägermaterialschicht (PAP1) liegt zwischen 2 und 12,
- der Farbkanal a* der Trägermaterialschicht (PAP1) liegt zwischen -7 und +3, und
- die Menge des gebleichten, recycelten Trennschicht-Holzstoffs (BRELP1) mindestens 1 Gew.-%, bezogen auf das Gesamtgewicht der Trägermaterialschicht (PAP1), beträgt, und
- die Trägermaterialschicht (PAP1) eine Grammatur von 30 Gramm pro Quadratmeter oder mehr aufweist.

2. Die Trägermaterialschicht nach Anspruch 1, wobei
- die Trägermaterialschicht (PAP1) einen Silikongehalt von weniger als 2,0 Gew.-% aufweist und/oder
- der gebleichte, recycelte Trennschicht-Holzstoff einen Silikongehalt zwischen 0 und 1,0 Gew.-% aufweist.

3. Die Trägermaterialschicht nach einem der vorhergehenden Ansprüche, wobei
- der Farbkanal a* der Trägermaterialschicht (PAP1) zwischen -5 und +1 liegt, und/oder
- der Farbkanal b* der Trägermaterialschicht (PAP1) zwischen 4 und 10 liegt.

4. Die Trägermaterialschicht nach einem der vorhergehenden Ansprüche, wobei die Menge des gebleichten recycelten Holzstoffs mindestens 5 Gew.-%, bezogen auf das Gesamtgewicht der Trägermaterialschicht (PAP1), beträgt.

5. Die Trägermaterialschicht nach einem der vorangehenden Ansprüche, wobei die Leichtigkeit L* der Trägermaterialschicht (PAP1) mindestens 92 beträgt.

6. Die Trägermaterialschicht nach einem der vorhergehenden Ansprüche, wobei
- die Trägermaterialschicht (PAP1) eine Beschichtung auf dem Papier (PAP2) umfasst, und/oder
- die Menge des gebleichten, recycelten Trennschicht-Holzstoffs zwischen 7 Gew.-% und 25 Gew.-%, bezogen auf das Gesamtgewicht der Trägermaterialschicht, beträgt, und/oder
- der Anteil des mechanischen Holzstoffs weniger als 5 Gew.-%, bezogen auf das Gesamtgewicht der Trägermaterialschicht (PAP1), beträgt und/oder die Gesamtmenge an mineralischen Füllstoffen in der Trägermaterialschicht weniger als 12 Gew.-%, bezogen auf das Gesamtgewicht der Trägermaterialschicht (PAP1), beträgt.

7. Eine Trennschicht, umfassend
- die Trägermaterialschicht (PAP1) nach einem der vorangehenden Ansprüche 1 bis 6, und
- eine Trennbeschichtungsschicht (RELCT1) auf der Trägermaterialschicht.

8. Ein Etikettenlaminat, umfassend
- die Trennschicht (REL1) nach Anspruch 7, und
- eine Deckschicht (FACE1),
wobei eine Klebstoffschicht (ADH1) zwischen der Trennschicht (REL1) und der Deckschicht (FACE1) vorgesehen ist.

9. Ein Verfahren zur Herstellung einer Trägermaterialschicht (PAP1), die zur Verwendung als Schicht einer Trennschicht (REL1) geeignet ist,
wobei das Verfahren Folgendes umfasst:
- Bleichen eines recycelten Trennschicht-Holzstoffs (RELP1) unter Verwendung mindestens einer der folgenden Chemikalien:
- Wasserstoffperoxid H₂O₂,
- Natriumdithionit Na₂S₂O₄,
- Natriumbisulfit NaHSO₃, und
- Natriumborhydrid-Lösung
um einen gebleichten recycelten Trennschicht-Holzstoff (BRELP1) zu bilden, bevor eine Holzstoffmischung (MIX1) gebildet wird,
- Bilden der Holzstoffmischung (MIX1), die Zellulosefasern umfasst, durch Mischen von mindestens gebleichtem chemischem Holzstoff (PULPV1) und dem gebleichten recycelten Trennschicht-Holzstoff (BRELP1),
- Bilden einer Papierbahn aus der Holzstoffmischung (MIX1),
- Reduzieren des Feuchtigkeitsgehalts der Papierbahn, wodurch Papier (PAP2) für die Trägermaterialschicht (PAP1) gebildet wird, und
- Behandeln des Papiers (PAP2), um die Trägermaterialschicht (PAP1) zu bilden, wobei
- die gebildete Trägermaterialschicht (PAP1) eine Grammatur von 30 Gramm pro Quadratmeter oder mehr aufweist,
wobei die Farbe (C/2°) der Trägermaterialschicht, gemäß der 2017 gültigen ISO 5631 Norm bestimmt, wie folgt ist:
- die Leichtigkeit L* der Trägermaterialschicht (PAP1) beträgt mindestens 90,
- der Farbkanal b* der Trägermaterialschicht (PAP1) liegt zwischen 2 und 12, und
- der Farbkanal a* der Trägermaterialschicht (PAP1) liegt zwischen -7 und +3,
und
- die Menge des gebleichten, recycelten Trennschicht-Holzstoffs (BRELP1) mindestens 1 Gew.-%, bezogen auf das Gesamtgewicht der Trägermaterialschicht (PAP1), beträgt.

10. Das Verfahren nach Anspruch 9, wobei der recycelte Trennschicht-Holzstoff unter Verwendung von Natriumdithionit Na₂S₂04 gebleicht wird und die Menge des Natriumdithionits zwischen 0,15 und 0,50 Gew.-%, bezogen auf das Trockengewicht des recycelten Trennschicht-Holzstoffs, beträgt.

11. Das Verfahren nach einem der vorangehenden Ansprüche 9 bis 10, wobei
- der gebleichte, recycelte Trennschicht-Holzstoff einen Silikongehalt zwischen 0 und 1,0 Gew.-% aufweist, und/oder
- der Farbkanal a* der Trägermaterialschicht (PAP1) zwischen -5 und +1 liegt, und der Farbkanal b* der Trägermaterialschicht (PAP1) zwischen 4 und 10 liegt.

12. Das Verfahren nach einem der vorangehenden Ansprüche 9 bis 11, wobei die Behandlung des Papiers (PAP2) Folgendes umfasst
- das Beschichten des Papiers (PAP2).

13. Das Verfahren nach einem der vorangehenden Ansprüche 9 bis 12, wobei
- die Menge des dosierten, gebleichten, recycelten Trennschicht-Holzstoffs zwischen 7 Gew.-% und 25 Gew.-%, bezogen auf das Gesamtgewicht der Trägermaterialschicht (PAP1), beträgt, und/oder
- die Menge an mechanischem Holzstoff weniger als 5 Gew.-%, bezogen auf das Gesamtgewicht der Trägermaterialschicht (PAP1), beträgt und die Gesamtmenge an mineralischen Füllstoffen in der Trägermaterialschicht weniger als 12 Gew.-%, bezogen auf das Gesamtgewicht der Trägermaterialschicht (PAP1), beträgt.

14. Verwendung einer Trägermaterialschicht (PAP1) nach einem der Ansprüche 1 bis 6 in Verbindung mit einer Trennbeschichtung.

15. Ein Verfahren zur Herstellung von gebleichtem, recycelten Trennschicht-Holzstoff, der zur Verwendung als Rohmaterial in einer Schicht einer Trennschicht geeignet ist, wobei das Verfahren Folgendes umfasst:
- Zerkleinern des wiedergewonnenen Trennschichtmaterials in einer Lösung auf Wasserbasis, um mindestens einige Silikonpartikel in der Lösung auf Wasserbasis zu lösen,
- Entfernen mindestens einiger der Silikonpartikel aus der Lösung auf Wasserbasis durch einen Flotationsschritt,
- Entfernen von mindestens einigen Verunreinigungen aus dem zerkleinerten Trennschichtmaterial in einem Siebschritt und/oder einem Reinigungsschritt, und
- Entfernen von mindestens einem Teil des Wassers aus dem zerkleinerten Trennschichtmaterial, um recycelten Trennschicht-Holzstoff (RELP1) zu bilden, und
- Bleichen des recycelten Trennschicht-Holzstoffs, um gebleichten recycelten Trennschicht-Holzstoff (BRELP1) zu bilden, unter Verwendung mindestens einer der folgenden Chemikalien:
- Wasserstoffperoxid H₂O₂,
- Natriumdithionit Na₂S₂O₄,
- Natriumbisulfit NaHSO₃, und
- Natriumborhydrid-Lösung.

## Revendications

1. Couche de matériau de support (PAP1) pour une doublure antiadhésive (REL1),
dans laquelle la couche de matériau de support (PAP1) comprend :
- une pâte chimique blanchie (PULPV1), et
- une pâte de doublure antiadhésive recyclée blanchie (BRELP1)
dans laquelle la couleur (C/2°) de la couche de matériau de support, déterminée selon la norme ISO 5631, en vigueur en 2017, est la suivante :
- la légèreté L* de la couche de matériau de support (PAP1) est d'au moins 90,
- le canal de couleur b* de la couche de matériau de support (PAP1) est compris entre 2 et 12,
- le canal de couleur a* de la couche de matériau de support (PAP1) est compris entre -7 et +3, et
- la quantité de pâte de doublure antiadhésive recyclée blanchie (BRELP1) est d'au moins 1 % en poids sur la base du poids total de ladite couche de matériau de support (PAP1), et
- la couche de matériau de support (PAP1) présente un grammage égal ou supérieur à 30 grammes par mètre carré.

2. Couche de matériau de support selon la revendication 1, dans laquelle
- la couche de matériau de support (PAP1) présente une teneur en silicone inférieure à 2,0 % en poids et/ou
- la pâte de doublure antiadhésive recyclée blanchie a une teneur en silicone comprise entre 0 et 1,0 % en poids.

3. Couche de matériau de support selon l'une quelconque des revendications précédentes, dans laquelle
- le canal de couleur a* de la couche de matériau de support (PAP1) est compris entre -5 et +1, et/ou
- le canal de couleur b* de la couche de matériau de support (PAP1) est compris entre 4 et 10.

4. Couche de matériau de support selon l'une quelconque des revendications précédentes, dans laquelle la quantité de pâte recyclée blanchie est d'au moins 5 % en poids sur la base du poids total de ladite couche de matériau de support (PAP1).

5. Couche de matériau de support selon l'une quelconque des revendications précédentes, dans laquelle la luminosité L* de la couche de matériau de support (PAP1) est d'au moins 92.

6. Couche de matériau de support selon l'une quelconque des revendications précédentes, dans laquelle
- la couche de matériau de support (PAP1) comprend un revêtement sur le papier (PAP2), et/ou
- la quantité de pâte de doublure antiadhésive recyclée blanchie est comprise entre 7 % en poids et 25 % en poids, calculée à partir du poids total de la couche de matériau de support, et/ou
- la quantité de pâte mécanique est inférieure à 5 % en poids, calculée à partir du poids total de la couche de matériau de support (PAP1) et/ou
la quantité totale de charges minérales dans la couche de matériau de support est inférieure à 12 % en poids sur la base du poids total de la couche de matériau de support (PAP1).

7. Revêtement antiadhésif comprenant
- la couche de matériau de support (PAP1) selon l'une quelconque des revendications précédentes 1 à 6, et
- une couche de revêtement antiadhésif (RELCT1) sur ladite couche de matériau de support.

8. Laminé pour étiquettes comprenant
- la doublure antiadhésive (REL1) selon la revendication 7, et
- une couche de visage (FACE1),
dans lequel une couche adhésive (ADH1) est disposée entre la doublure antiadhésive (REL1) et la couche frontale (FACE1).

9. Procédé de fabrication d'une couche de matériau de support (PAP1) appropriée pour être utilisée comme couche d'un revêtement antiadhésif (REL1),
le procédé comprenant :
- le blanchissement d'une pâte de doublure antiadhésive recyclée (RELP1) en utilisant au moins l'un des produits chimiques suivants :
- du peroxyde d'hydrogène H₂O₂,
- du dithionite de sodium Na₂S₂O₄,
- du bisulfite de sodium NaHSO₃, et
- une solution de borohydrure de sodium afin de former une pâte de revêtement antiadhésif recyclée blanchie (BRELP1) avant de former un mélange de pâte (MIX1),
- la formation du mélange de pâte (MIX1) comprenant des fibres de cellulose en mélangeant au moins la pâte chimique blanchie (PULPV1) et la pâte de doublure antiadhésive recyclée blanchie (BRELP1),
- la formation d'une bande de papier à partir du mélange de pâte (MIX1),
- la réduction de la teneur en humidité de la bande de papier, formant ainsi du papier (PAP2) pour la couche de matériau de support (PAP1), et
- le traitement du papier (PAP2) afin de former la couche de matériau de support (PAP1), dans lequel
- la couche de matériau de support formée (PAP1) présente un grammage égal ou supérieur à 30 grammes par mètre carré,
dans lequel la couleur (C/2°) de la couche de matériau de support, déterminée selon la norme ISO 5631, en vigueur en 2017, est la suivante :
- la légèreté L* de ladite couche de matériau de support (PAP1) est d'au moins 90,
- le canal de couleur b* de ladite couche de matériau de support (PAP1) est compris entre 2 et 12, et
- le canal de couleur a* de ladite couche de matériau de support (PAP1) est compris entre -7 et +3,
et
- la quantité de pâte de doublure antiadhésive recyclée blanchie (BRELP1) est d'au moins 1 % en poids sur la base du poids total de ladite couche de matériau de support (PAP1).

10. Procédé selon la revendication 9, dans lequel la pâte de doublure antiadhésive recyclée est blanchie à l'aide de dithionite de sodium Na₂S₂O₄ et la quantité de dithionite de sodium est comprise entre 0,15 et 0,50 % en poids, calculée à partir du poids sec de la pâte de revêtement antiadhésif recyclée.

11. Procédé selon l'une quelconque des revendications précédentes 9 à 10, dans lequel
- la pâte de doublure antiadhésive recyclée blanchie présente une teneur en silicone comprise entre 0 et 1,0 % en poids, et/ou
- le canal de couleur a* de la couche de matériau de support (PAP1) est compris entre -5 et +1, et le canal de couleur b* de la couche de matériau de support (PAP1) est compris entre 4 et 10.

12. Procédé selon l'une quelconque des revendications précédentes 9 à 11, dans lequel le traitement du papier (PAP2) comprend
- l'enduction du papier (PAP2).

13. Procédé selon l'une quelconque des revendications précédentes 9 à 12, dans lequel
- la quantité de pâte de revêtement antiadhésif recyclée blanchie dosée est comprise entre 7 % en poids et 25 % en poids, calculée à partir du poids total de la couche de matériau de support (PAP1) et/ou
- la quantité de pâte mécanique est inférieure à 5 % en poids, calculée à partir du poids total de la couche de matériau de support (PAP1), et la quantité totale de charges minérales dans la couche de matériau de support est inférieure à 12 % en poids sur la base du poids total de la couche de matériau de support (PAP1).

14. Utilisation d'une couche de matériau de support (PAP1) selon l'une quelconque des revendications 1 à 6 en combinaison avec un revêtement antiadhésif.

15. Procédé de fabrication de pâte de doublure antiadhésive recyclée blanchie appropriée pour être utilisée comme matière première dans une couche d'une doublure antiadhésive, le procédé comprenant :
- la mise en pâte du matériau de revêtement antiadhésif récupéré dans une solution à base d'eau afin de libérer au moins certaines particules de silicone dans ladite solution à base d'eau,
- l'élimination d'au moins certaines desdites particules de silicone de la solution à base d'eau à l'aide d'une étape de flottation,
- l'élimination d'au moins certaines impuretés du matériau de revêtement antiadhésif réduit en pâte lors d'une étape de criblage et/ou d'une étape de nettoyage, et
- l'élimination d'au moins une partie de l'eau dudit matériau de doublure antiadhésive réduit en pâte afin de former une pâte de doublure antiadhésive recyclée (RELP1), et
- le blanchissement de la pâte de doublure antiadhésive recyclée afin de former une pâte de doublure antiadhésive recyclée blanchie (BRELP1) en utilisant au moins l'un des produits chimiques suivants :
- du peroxyde d'hydrogène H₂O₂,
- du dithionite de sodium Na₂S₂O₄,
- du bisulfite de sodium NaHSO₃, et
- une solution de borohydrure de sodium.
